(19)

Europäisches
Patentamt
European
Patent Office
Office européen
des brevets

(11) **EP 2 045 287 A1**

(12) **EUROPEAN PATENT APPLICATION**
published in accordance with Art. 153(4) EPC

(43) Date of publication:
**08.04.2009 Bulletin 2009/15**

(21) Application number: **07790678.2**

(22) Date of filing: **12.07.2007**

(51) Int Cl.:
*C08L 9/00* (2006.01)      *A43B 13/04* (2006.01)
*C08J 9/04* (2006.01)      *C08K 3/04* (2006.01)
*C08K 3/36* (2006.01)      *C08L 101/00* (2006.01)

(86) International application number:
**PCT/JP2007/063884**

(87) International publication number:
**WO 2008/013060 (31.01.2008 Gazette 2008/05)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **26.07.2006 JP 2006203549**
**26.07.2006 JP 2006203548**
**04.08.2006 JP 2006213874**

(71) Applicant: **Ube Industries, Ltd.**
**Ube-shi**
**Yamaguchi 755-8633 (JP)**

(72) Inventors:
• **WADA, Takashi**
 **Ichihara-shi, Chiba 2900045 (JP)**
• **NAKAMURA, Yukio**
 **Ichihara-shi, Chiba 2900045 (JP)**
• **OKAMOTO, Naomi**
 **Ichihara-shi, Chiba 2900045 (JP)**

(74) Representative: **Gille Hrabal Struck Neidlein Prop
Roos**
**Patentanwälte**
**Brucknerstrasse 20**
**40593 Düsseldorf (DE)**

(54) **RUBBER COMPOSITION FOR SHOE SOLE AND RUBBER FOAM COMPOSITION**

(57)     Provided is a rubber composition for shoe soles prepared by blending 100 mass parts of a polymer component comprising 10 to 90 mass % of a vinyl/cis-polybutadiene rubber (A) comprising 1,4-cis-polybutadiene (a) and 1,2-polybutadiene crystalline fibers (b) in which the crystalline fibers have an average fiber length of 200 nm or less and an average aspect ratio of 10 or less, in which the number of the crystalline fibers having a fiber length of 200 nm or less is 90 fibers or more per 25 $\mu$m$^2$ and in which a melting point is 170°C or higher, 10 to 50 mass % of a diene base rubber (B) other than the polybutadiene rubber (A) and 2 to 50 mass % of a thermoplastic polymer (C) with 2 to 50 mass parts of a rubber reinforcing material (D).

The above rubber composition for shoe soles has a light weight and an appropriate hardness and is excellent in a tensile strength, a tear strength, an abrasion resistance and a gripping property and excellent as well in a dimensional stability after foaming, and it is suited as an outsole for shoes.

EP 2 045 287 A1

**Description**

BACKGROUND OF THE INVENTION

The present invention relates to a rubber composition for shoe soles which is lightweight and has an appropriate hardness and which is excellent in a tensile strength, a tear strength, an abrasion resistance and a gripping property and a rubber foam composition for shoe soles which is excellent as well in a dimensional stability of a shoe sole after foaming.

RELATED ART

A strength which supports a weight of a wearer and which endures a load and an impact force brought about by exercise, a foot comfort of shoes, a reduction in a weight for enhancing a safety and a gripping property are required to a rubber composition for shoe soles, and various proposals have been made (refer to, for example, patent documents 1 to 6).
A rubber composition which is reinforced by blending a 1,2-polybutadiene, polyisoprene rubber and the like with a styrene butadiene rubber and an inorganic reinforcing material is disclosed in the patent document 1. However, an increase in an amount of the inorganic reinforcing material involves the problems that the viscosity is elevated though the composition is reduced in swell or the product is increased in a weight and that the abrasion resistance and the tear strength are not satisfactory due to the blended styrene butadiene rubber.
An outsole for shoes comprising a vulcanized molded material of a rubber composition in which a mixture of a solution-polymerized styrene-butadiene rubber having a specific loss factor peak temperature with a butadiene rubber is blended with hydrated silica in order to enhance an abrasion resistance and a gripping property is disclosed in the patent document 2. However, an effect of improving an abrasion resistance and a gripping property thereof as a shoe sole material has been unsatisfactory.
A shoe sole composed of a laminate of an intermediate sole formed by a cushioned foam and an outside sole formed by a semi-hard rubber having a hardness of 50 to 70 degree in order to improve an impact absorption is disclosed in the patent document 3. However, the semi-hard rubber having a hardness of 50 to 70 degree involves the problems that it is hard and exerts a large load onto a knee and that it is slippy since it is less liable to be brought into tight contact with the ground, so that falling is likely to take place on a wet road.
An outsole in which a base material rubber comprises bromide of a copolymer of isobutylene and para-methylstyrene is disclosed in the patent document 4. It is shown therein that the above base material rubber is improved in a gripping property to some extent but deteriorated in an abrasion resistance, so that a large amount of carbon black is blended as a reinforcing filler, and the problem that a reduction in the weight is unsatisfactory is involved therein.
A shoe sole material obtained by foaming and curing a composition prepared by blending a polymer with syndiotactic 1,2-polybutadiene having a hardness of 98 or more and a melting point of 110°C or higher and cis 1,4-polybutadiene is disclosed in the patent document 5. Further, a composition for a foam comprising 1,2-polybutadiene, a vinyl/cis-butadiene rubber, a thermoplastic polymer, a foaming agent and a cross-linking agent is disclosed in the patent document 6, and it is described therein that the above composition is useful as a composition for shoe soles. However, a strength and an abrasion resistance of the above foaming materials do not stay at a satisfactory level and are required to be further improved.
Patent document 1: Japanese Patent Application Laid-Open No. 86740/1991
Patent document 2: Japanese Patent Application Laid-Open No. 17717/1998
Patent document 3: Japanese Patent Application Laid-Open No. 299404/2001
Patent document 4: Japanese Patent Application Laid-Open No. 282006/2002
Patent document 5: Japanese Patent Application Laid-Open No. 166603/2000
Patent document 6: Japanese Patent Application Laid-Open No. 16518/2006

DISCLOSURE OF THE INVENTION

An object of the present invention is to provide a rubber composition for shoe soles which is lightweight and has an appropriate hardness and which is excellent in a tensile strength, a tear strength, an abrasion resistance and a gripping property and a rubber foam composition for shoe soles which is excellent as well in a dimensional stability after foaming.
The present inventors have found that a rubber composition obtained by blending specific vinyl/cis-polybutadiene containing fibrous 1,2-polybutadiene with a diene base rubber other than the above rubber, a thermoplastic polymer and a rubber reinforcing material in specific amounts can achieve the object described above, and thus they have completed the present invention.

That is, the present invention provides the following matters described in items [1] to [4].

[1] A rubber composition for shoe soles prepared by blending 100 mass parts of a polymer component comprising 10 to 90 mass % of a vinyl/cis-polybutadiene rubber (A) comprising 1,4-cis-polybutadiene (a) and 1,2-polybutadiene crystalline fibers (b) in which the crystalline fibers have an average fiber length of 200 nm or less and an average aspect ratio of 10 or less, in which the number of the crystalline fibers having a fiber length of 200 nm or less is 90 fibers or more per 25 $\mu m^2$ and in which a melting point is 170°C or higher, 10 to 50 mass % of a diene base rubber (B) other than the polybutadiene rubber (A) and 2 to 50 mass % of a thermoplastic polymer (C) with 2 to 50 mass parts of a rubber reinforcing material (D).

[2] An outsole for shoes characterized by using the rubber composition for shoe soles as described in the above item [1].

[3] A rubber foam composition for shoe soles prepared by foaming the rubber composition as described in the above item [1].

[4] An outsole for shoes characterized by using the rubber foam composition as described in the above item [3].

The rubber composition for shoe soles according to the present invention is lightweight and has an appropriate hardness, and it is excellent in a tensile strength, a tear strength, an abrasion resistance and a gripping property. The rubber foam composition for shoe soles according to the present invention is excellent, in addition to the characteristics described above, in a dimensional stability after foaming. An outsole for shoes prepared by using the rubber composition or the rubber foam composition according to the present invention as a rubber base material is suited as an outsole for shoes such as men's shoes, ladies' shoes, sport shoes and the like.

BRIEF DESCRIPTION OF THE DRAWINGS

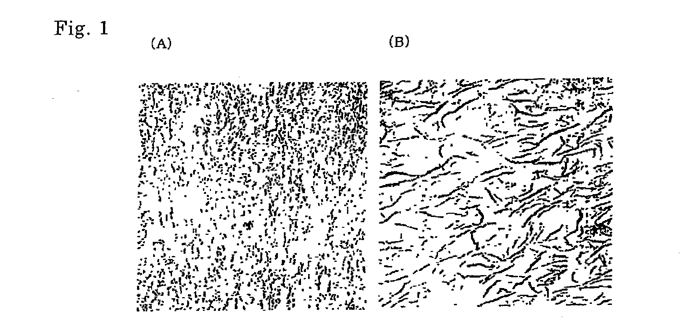

Fig. 1 (A) is a schematic drawing of a transmission type electron micrograph obtained in Production Example 1, and (B) is a schematic drawing of a transmission type electron micrograph obtained in Comparative Production Example 1.

DISCLOSURE OF THE INVENTION

Rubber composition for shoe soles:

The rubber composition for shoe soles according to the present invention is prepared by blending 100 mass parts of a polymer component comprising 10 to 90 mass % of a vinyl/cis-polybutadiene rubber (A) comprising 1,4-cis-polybutadiene (a) and 1,2-polybutadiene crystalline fibers (b) in which the crystalline fibers have an average fiber length of 200 nm or less and an average aspect ratio of 10 or less and in which the number of the crystalline fibers having a fiber length of 200 nm or less is 90 fibers or more per 25 $\mu m^2$ and a melting point is 170°C or higher, 10 to 50 mass % of a diene base rubber (B) other than the vinyl/cis-polybutadiene rubber (A) and 2 to 50 mass % of a thermoplastic polymer (C) with 2 to 50 mass parts of a rubber reinforcing material (D).

The rubber composition for shoe soles according to the present invention has three embodiments depending on a difference in the vinyl/cis-polybutadiene rubber (A). The details of the first embodiment to the third embodiment shall be explained below in order.

Rubber composition for shoe soles according to the first embodiment:

In the first embodiment of the present invention, the vinyl/cis-polybutadiene rubber (A) in the rubber composition for shoe soles described above is a vinyl/cis-polybutadiene rubber (A-1) obtained by:

(1) subjecting a mixture comprising 1,3-butadiene and a hydrocarbon base solvent as principal components to cis-1,4-polymerization with 1,3-butadiene in the presence of a catalyst comprising an organic aluminum compound and a soluble cobalt compound to produce 1,4-cis-polybutadiene (a) and

(2) polymerizing the polymerization reaction mixture thus obtained with 1,3-butadiene in the presence of a catalyst comprising an organic aluminum compound and carbon disulfide and in the presence of an unsaturated high molecular compound comprising at least one selected from polyisoprene, crystalline polybutadiene having a melting point of 150°C or lower, liquid polybutadiene and derivatives thereof after further adding 1,3-butadiene to the above polymerization reaction mixture or without adding 1,3-butadiene thereto to produce 1,2-polybutadiene crystalline fibers (b) having a melting point of 170°C or higher,

(3) wherein the 1,2-polybutadiene crystalline fibers (b) and the unsaturated high molecular compound are dispersed in a matrix comprising the 1,4-cis-polybutadiene (a).

Vinyl/cis-polybutadiene rubber (A-2):

The vinyl/cis-polybutadiene rubber (A-1) used in the first embodiment of the present invention is produced through the steps (1) to (3) described above, whereby it is provided with excellent mechanical characteristics.
An appropriate example of a production process for the vinyl/cis-polybutadiene rubber (A-1) shall be explained below.
The unsaturated high molecular compound can be added in the step (2), but from the viewpoint of evenly dispersing the unsaturated high molecular compound in the matrix comprising the 1,4-cis-polybutadiene (a), the unsaturated high molecular compound can be added as well in advance in the step (1).
Further, from the viewpoint of efficiently promoting a continuous polymerization reaction, carbon disulfide which is used as the catalyst in the step (2) can be added as well in advance in the step (1).

Step (1):

First, 1,3-butadiene is mixed with a hydrocarbon base solvent, and 1,3-butadiene is subjected to cis-1,4-polymerization in the presence of a catalyst comprising an organic aluminum compound and a soluble cobalt compound to produce 1,4-cis-polybutadiene (a) having a 1,4-cis structure content of preferably 80 mol % or more.
The hydrocarbon base solvent includes aromatic hydrocarbons such as benzene, toluene, xylene and the like, aliphatic hydrocarbons such as n-hexane, butane, heptane, pentane and the like, alicyclic hydrocarbons such as cyclopentane, cyclohexane and the like, olefin base hydrocarbons such as olefin compounds of the hydrocarbons described above, cis-2-butene, trans-2-butene and the like, hydrocarbon base solvents such as mineral spirits, solvent naphtha, kerosene and the like and halogenated hydrocarbon base solvents such as methylene chloride and the like. A 1,3-butadiene monomer (SP value: 6.8) itself also can be used as the polymerization solvent.
Among them, the solvents having a solubility parameter (SP value) of 9.0 or less are preferred. The hydrocarbon base solvents can be used alone or in combination of two or more kinds thereof so as to control an SP value to 9.0 or less. The hydrocarbon base solvents having a solubility parameter of 9.0 or less shall be described in details in the explanations of the second embodiment.
The mixture comprising 1,3-butadiene and the hydrocarbon base solvent as principal components which is obtained by mixing both components is preferably controlled in a concentration of a moisture thereof before brought into contact with the organic aluminum compound which is one of the catalyst components. The moisture concentration can be controlled by a publicly known method, for example, a method in which the mixture is added and dispersed by passing through a porous filtering material (refer to Japanese Patent Application Laid-Open No. 85304/1992).
The moisture concentration falls in a range of preferably 0.1 to 1.0 mole, particularly preferably 0.2 to 1.0 mole per mole of the organic aluminum compound contained in the mixture described above. The moisture concentration falling in the above range makes it possible to effectively inhibit a reduction in the catalyst activity, a reduction in the cis-1,4 structure content, an abnormal variation in the molecular weight, gel produced in the polymerization and the like to make it possible to carry out continuous polymerization over a long period of time.
The organic aluminum compound and the soluble cobalt compound are added as a catalyst to the mixture described above in which a moisture concentration is controlled to carry out cis-1,4-polymerization. An addition order of the organic aluminum compound and the soluble cobalt compound shall not specifically be restricted, and the soluble cobalt compound is added preferably after adding the organic aluminum compound.

Organic aluminum compound:

The organic aluminum compound shall not specifically be restricted, and it is preferably at least one selected from (I) trialkylaluminum compounds and triphenylaluminum compounds, (II) organic aluminum halogen compounds and (III) hydrogenated organic aluminum compounds.
The trialkylaluminum compounds (I) include trialkylaluminum compounds having an alkyl group having 1 to 10 carbon atoms, preferably 1 to 6 carbon atoms such as trimethylaluminum, triethylaluminum, triisobutylaluminum, trihexylaluminum, trioctylaluminum, tridecylaluminum and the like.
The organic aluminum halogen compounds (II) include organic aluminum halogen compounds having an alkyl group having 1 to 6 carbon atoms such as (i) dialkylaluminum monohalides, (ii) alkylaluminum dihalides and (iii) alkylaluminum sesquihalides and in addition thereto, dicyclohexylaluminum monochloride, diphenylaluminum monochloride and the like.
The dialkylaluminum monohalides (i) include dialkylaluminum monochlorides such as dimethylaluminum monochloride, diethylaluminum monochloride and dibutylaluminum monochloride, diethylaluminum monobromide and the like.
The alkylaluminum dihalides (ii) include alkylaluminum dichlorides such as ethylaluminum dichloride and the like, alkylaluminum dibromide and the like.

The alkylaluminum sesquihalides (iii) include alkylaluminum sesquichloride such as ethylaluminum sesquichloride and the like, alkylaluminum sesquibromide and the like.

The hydrogenated organic aluminum compounds (III) include diethylaluminum hydride, diisobutylaluminum hydride, sesquiethylaluminum hydride and the like.

Among them, the organic aluminum halogen compounds (II) are preferred, and dialkylaluminum monohalides are more preferred. Dialkylaluminum monochlorides having an alkyl group having 1 to 6 carbon atoms are particularly preferred. The organic aluminum compounds described above can be used alone or in combination of two or more kinds thereof. A use amount of the organic aluminum compounds is preferably 0.1 millimole or more, particularly preferably 0.5 to 50 millimole per mole of the whole amount of 1,3-butadiene.

Soluble cobalt compound:

The soluble cobalt compound is preferably a compound which is soluble or can homogeneously be dispersed in an inert medium comprising a hydrocarbon base solvent as a principal component or liquid 1,3-butadiene. To be specific, it includes, for example, β-diketone complexes of cobalt such as cobalt (II) acetylacetonate, cobalt (III) acetylacetonate and the like, β-keto acid ester complexes of cobalt such as cobalt acetoacetic acid ethyl ester complexes and the like, cobalt salts of organic carboxylic acids having 6 or more carbon atoms such as cobalt octoate, cobalt naphthenate, cobalt benzoate and the like and halogenated cobalt complexes such as cobalt chloride pyridine complexes, cobalt chloride ethyl alcohol complexes and the like.

A use amount of the soluble cobalt compound is preferably 0.001 millimole or more, particularly preferably 0.005 to 0.1 millimole per mole of 1,3-butadiene.

A mole ratio (Al/Co) of the organic aluminum chloride to the soluble cobalt compound is preferably 10 or more, particularly preferably 50 or more.

A reaction temperature for carrying out the cis-1,4-polymerization is preferably over 0°C and 100°C or lower, more preferably 10 to 100°C and particularly preferably 20 to 100°C. The polymerization time (average residence time) is preferably 10 minutes to 2 hours. The cis-1,4-polymerization is preferably carried out so that the polymer concentration after the polymerization is 5 to 26 mass %.

A single bath or a bath obtained by connecting two or more baths can be used for the polymerization bath (polymerization vessel). The polymerization can be carried out by stirring and mixing the polymerization solution using a polymerization bath equipped with a high viscosity liquid stirring device, for example, an apparatus described in Japanese Patent Publication No. 2645/1965.

In the cis-1,4-polymerization, capable of being used are publicly known molecular weight controlling agents, for example, non-conjugate dienes such as cyclooctadiene, allene, methylallene (1,2-butadiene) and the like, α-olefins such as ethylene, propylene, butene-1 and the like and publicly known gelation inhibitors for inhibiting production of gels in polymerization.

The 1,4-cis-polybutadiene (a) thus obtained has preferably the following characteristics from the viewpoint of a processability, a strength and an abrasion resistance.

(1) The 1,4-cis structure content is preferably 80 mol % or more, more preferably 90 mol % or more and particularly preferably 95 to 100 mol %. The cis structure content is a value calculated from an absorption intensity ratio of a peak 740 cm$^{-1}$ in a cis structure determined by infrared absorption spectral analysis.

(2) The Mooney viscosity (ML1 + 4, 100°C) is preferably 10 to 130, more preferably 15 to 80. This enhances the workability in blending and the dispersibility. The Mooney viscosity is a value measured at 100°C according to JIS K6300.

(3) The 5 mass % toluene solution viscosity (T-cp) at 25°C is preferably 10 to 300 centipoise (cp), more preferably 20 to 200 cp and particularly preferably 30 to 200 cp.

(4) A ratio (toluene solution viscosity/Mooney viscosity) of the toluene solution viscosity (T-cp) to the Mooney viscosity (ML1 + 4, 100°C) is 1 or more, preferably 1 to 4.

(5) The intrinsic viscosity [η] is 1.0 to 5.0 dl/g, preferably 1.0 to 4.0 dl/g.

The intrinsic viscosity [η] is a value determined by the following equation by putting 0.1 g of the sample rubber and 100 ml of toluene into a conical flask to completely dissolve the sample at 30°C and then putting 10 ml of the solution prepared above into a Canon Fenske kinetic viscometer in a constant temperature water bath controlled to 30°C to measure a falling time (T) of the solution.

$$\text{Specific viscosity } (\eta_{sp}) = T/T - 1 \text{ (falling time of toluene only)}$$

$$\text{Molecular weight index } (\eta_{sp}/c) = [\eta] + k'[\eta]^2 c$$

(k': Huggins constant (0.37), c: sample concentration (g/ml))

(6) A toluene-insoluble content is 0.5 mass % or less, and a gel is not substantially contained.

In this respect, the toluene-insoluble content is a gel content obtained by putting 10 g of the sample rubber and 400 ml of toluene into a conical flask to completely dissolve the sample at room temperature (25°C) and then filtering the solution through a filter equipped with a metal gauze of 200 mesh to obtain a gel adhered on the metal gauze after filtering. The metal gauze on which the gel is adhered is dried under vacuum to measure an adhered amount thereof, and the toluene-insoluble content is shown by a percentage based on the sample rubber.

(7) The polystyrene-reduced weight average molecular weight is 300,000 to 800,000, preferably 300,000 to 600,000.

Further, capable of being used for the 1,4-cis-polybutadiene (a) is cis-polybutadiene alone synthesized using a cobalt catalyst such as a soluble cobalt compound and the like, a nickel catalyst such as organic carboxylic acid salts of nickel and the like, an organic lithium compound, an organic carboxylic acid salt of neodymium or a lanthanoid catalyst such as organic complex salts and the like, or cis-polybutadiene obtained by blending two or more kinds of the above cis-polybutadienes. When the above 1,4-cis-polybutadiene is used, the hydrocarbon base solvent used, the conditions of controlling the moisture concentration, the 1,2-polymerization conditions and the like are the same as described above. A concentration of the 1,4-cis-polybutadiene (a) in the mixture controlled in a moisture concentration which comprises 1,3-butadiene and the hydrocarbon base organic solvent as principal components is preferably 1 to 30 mass %.

Step (2):

The polymerization reaction mixture containing 1,4-cis-polybutadiene which is obtained in the step (1) described above is subjected to 1,2-polymerization with 1,3-butadiene in the presence of a catalyst comprising an organic aluminum compound represented preferably by a formula AlR$_3$ (wherein R is an alkyl group having 1 to 6 carbon atoms, a phenyl group or a cycloalkyl group) and carbon disulfide and, if necessary, a catalyst comprising the soluble cobalt compound described above and in the presence of an unsaturated high molecular compound comprising at least one selected from polyisoprene, crystalline polybutadiene having a melting point of 150°C or lower, liquid polybutadiene and derivatives thereof after further adding 1,3-butadiene to the above polymerization reaction mixture or without adding 1,3-butadiene thereto to produce the 1,2-polybutadiene crystalline fibers (b) having a melting point of 170°C or higher.

In the above case, the vinyl/cis-polybutadiene rubber (A-1) in which 1 to 40 mass % of the 1,2-polybutadiene crystalline fibers (b) having a melting point of 170°C or higher and 0.1 to 30 mass % of the unsaturated high molecular compound (c) are dispersed in a matrix comprising the 1,4-cis-polybutadiene (a) can be produced by adding the unsaturated high molecular compound to the reaction system before starting the 1,2-polymerization and then carrying out the polymerization reaction.

Unsaturated high molecular compound:

The unsaturated high molecular compound used in the first embodiment of the present invention is at least one selected from polyisoprene, liquid polybutadiene, crystalline polybutadiene having a melting point of 150°C or lower and derivatives thereof, and it is a high molecular substance having at least one unsaturated double bond per a repetitive unit.

The polyisoprene includes ordinary synthesized polyisoprene (cis-1,4-polyisoprene having a cis structure of 90 mol % or more and the like), liquid polyisoprene, trans-polyisoprene, other modified polyisoprenes and the like.

The liquid polybutadiene includes polybutadiene of a very low molecular weight having an intrinsic viscosity [η] of 1 or less. The crystalline polybutadiene having a melting point of lower than 170°C is preferably crystalline polybutadiene having a melting point of 0 to 150°C, and it includes, for example, 1,2-polybutadiene having a low melting point, trans-polybutadiene and the like.

The derivatives thereof include, for example, isoprene/isobutylene copolymers, isoprene/styrene copolymers, styrene/isoprene/styrene block copolymers, liquid epoxidized polybutadiene, carboxy group-modified liquid polybutadiene, hydrogenated derivatives thereof and the like.

Among them, polyisoprene, the styrene/isoprene/styrene block copolymers and 1,2-polybutadiene having a melting point of 70 to 110°C are particularly preferred.

The unsaturated high molecular compound can be used alone or in combination of two or more kinds thereof.

If the unsaturated high molecular compound is added in the manner described above, a dispersibility of the 1,2-polybutadiene crystalline fibers (b) into the 1,4-cis-polybutadiene (a) which is the matrix component is notably improved in the vinyl/cis-polybutadiene rubber (A-1) due to a compatibility effect of the unsaturated high molecular compound, and as a result thereof, the vinyl/cis-polybutadiene rubber (A-1) obtained is provided with excellent characteristics. An addition amount of the unsaturated high molecular compound is preferably 0.1 to 30 mass %, more preferably 1 to 20 mass % based on the vinyl/cis-polybutadiene rubber (A-1) obtained. In adding at any point of time, stirring is carried out preferably for 10 minutes to 3 hours, more preferably 10 to 30 minutes after added.

The organic aluminum compound represented by the formula $AlR_3$ described above which is one component of the catalyst used in the step (2) includes trimethylaluminum, triethylaluminum, triisobutylaluminum, tri-n-hexylaluminum, triphenylaluminum, tricyclohexylaluminum and the like.

A use amount of the organic aluminum compound is preferably 0.1 millimole or more, particularly preferably 0.5 to 50 millimole per mole of 1,3-butadiene.

Carbon disulfide shall not specifically be restricted and does not preferably contain moisture. A concentration of carbon disulfide is preferably 20 millimole/L or less, particularly preferably 0.01 to 10 millimole/L. Publicly known phenyl isothiocyanate and xanthogenic acid compounds can be used as an alternative for carbon disulfide.

Further, organic carboxylic acid salts of nickel, organic complex salts of nickel, organic lithium compounds, organic carboxylic acid salts of neodymium and organic complex salts of neodymium can be used in combination as one component of the catalyst.

The reaction temperature for carrying out the 1,2-polymerization is preferably -5 to 100°C, particularly preferably -5 to 50°C. A yield of 1,2-polybutadiene in carrying out the 1,2-polymerization can be increased by adding 1,3-butadiene to the polymerization reaction system in an amount of 1 to 50 mass parts, preferably 1 to 20 mass parts per 100 mass parts of the cis-1,4-polymerization reaction mixture described above. The polymerization time (average residence time) is preferably 10 minutes to 2 hours.

The 1,2-polymerization is preferably carried out so that the polymer concentration after the polymerization is 9 to 29 mass %.

A single bath or a bath obtained by connecting two or more baths can be used for the polymerization bath (polymerization vessel). The polymerization reaction system is further increased in a viscosity during the 1,2-polymerization, and therefore the polymerization can be carried out by stirring and mixing the polymerization solution using a polymerization bath equipped with a high viscous liquid stirring device, for example, an equipment described in Japanese Patent Publication No. 2645/1965.

A publicly known antioxidant (described later) can be added according to an ordinary method after the 1,2-polymerization reaction reaches a prescribed polymerization rate. An addition amount of the antioxidant is preferably 0.001 to 5 mass parts per 100 mass parts of the vinyl/cis-polybutadiene rubber (A-1).

Next, a polymerization terminating agent is added to the polymerization reaction system to terminate the polymerization. The termination can be carried out, for example, by a publicly known method such as a method in which a polar solvent including alcohol such as methanol, ethanol and the like or water is added to the polymerization reaction solution after the polymerization reaction is finished and a method in which an inorganic acid such as hydrochloric acid, sulfuric acid and the like, an organic acid such as acetic acid, benzoic acid and the like or hydrogen chloride gas is added to the polymerization reaction solution. Then, the vinyl/cis-polybutadiene rubber (A-1) produced is separated, washed and dried by conventional methods.

1,3-Butadiene, the hydrocarbon base organic solvent and the like can be separated and recovered from a mixture containing unreacted 1,3-butadiene, the hydrocarbon base organic solvent and, in a certain case, carbon disulfide in a remnant left after separating and obtaining the vinyl/cis-polybutadiene rubber (A-1) by distilling, adsorption separating treatment and the like.

According to the above method, the catalyst components are provided with an excellent operability, and the vinyl/cis-polybutadiene rubber (A-1) can be produced industrially advantageously at a high catalyst efficiency. In particular, the rubber component is not adhered onto an inner wall of the polymerization bath, the stirring blades and other parts in which stirring is slow, and continuous production can be carried out industrially advantageously at a high conversion rate over a long period of time.

The vinyl/cis-polybutadiene rubber (A-1) has a Mooney viscosity (ML1 + 4, 100°C) of preferably 20 to 150, more preferably 30 to 100 and particularly preferably 30 to 80.

The vinyl/cis-polybutadiene rubber (A-1) thus obtained has a structure in which 1 to 40 mass % of the 1,2-polybutadiene crystalline fibers (b) having a melting point of 170°C or higher and 0.1 to 30 mass %, preferably 1 to 20 mass % of the unsaturated high molecular compound are dispersed in an adsorbed state in the matrix comprising the 1,4-cis-polybutadiene (a) having a 1,4-cis structure content of 80 mol % or more. A boiling n-hexane-insoluble part of the vinyl/cis-polybutadiene rubber (A-1) is a part or all of the 1,2-polybutadiene crystalline fibers (b) and the unsaturated high molecular compound, and an adsorption rate (graft rate) of the unsaturated high molecular compound onto the 1,2-polybutadiene crystalline fibers (b) can be calculated by an infrared absorption spectral analysis. The above adsorption rate (graft rate) is preferably 5 to 200 mass %, more preferably 10 to 120 mass %, further preferably 20 to 90 mass % and particularly preferably 30 to 80 mass %.

The boiling n-hexane-insoluble part is a value obtained by boiling and extracting 2 g of the vinyl/cis-polybutadiene rubber (A-1) in 200 ml of n-hexane for 4 hours by a Soxhlet method and showing the extract remnant by mass %.

A dispersion mode of the 1,2-polybutadiene (b-1) and the unsaturated high molecular compound in the vinyl/cis-polybutadiene rubber (A-1) includes, in observation under a transmission type electron microscope, a mode in which the crystalline fibers of the 1,2-polybutadiene (b-1) and the fine particles of the unsaturated high molecular compound each are dispersed separately in the matrix comprising the 1,4-cis-polybutadiene (a), a mode in which they are dispersed in the state that the fine particles of the unsaturated high molecular compound are adhered onto the 1,2-polybutadiene crystalline fibers (b), a mode in which they are dispersed in the state that the 1,2-polybutadiene crystalline fibers (b) are adhered onto the fine particles of the unsaturated high molecular compound, a mode in which they are dispersed in the state that the 1,2-polybutadiene crystalline fibers (b) are included and dispersed in the fine particles of the unsaturated high molecular compound and a mode in which the modes described above are present in a mixture.

In the 1,2-polybutadiene crystalline fibers (b), the crystalline fibers have an average fiber length of 200 nm or less and an average aspect ratio of 10 or less; the number of the crystalline fibers having an average fiber length of 200 nm or less is 90 fibers or more per 25 $\mu m^2$; and the melting point is 170°C or higher.

An average fiber length of the 1,2-polybutadiene crystalline fibers (b) in a monodispersion state is preferably 180 nm or less, more preferably 160 nm or less and particularly preferably 10 to 150 nm.

A thickness (diameter) of the 1,2-polybutadiene crystalline fibers (b) is preferably 100 nm or less, and an average aspect ratio (length/diameter) thereof is preferably 10 or less, more preferably 4 or less, further preferably 3 to 0.5 and particularly preferably 3 to 1.

In observation under a transmission type electron microscope, the number of the crystalline fibers having a fiber length of 200 nm or less is preferably 95 fibers or more per 25 $\mu m^2$, more preferably 100 to 200 fibers per 25 $\mu m^2$, and they have preferably a short fiber crystal form.

The 1,2-polybutadiene crystalline fibers (b) has a melting point of preferably 190 to 220°C, and the molecular weight index ($\eta_{sp}/c$) described above is preferably 0.5 to 4, more preferably 1 to 3.

Diene base rubber (B-1) :

The diene base rubber (B-1) other than the (A-1) component includes natural rubber (NR), polyisoprene rubber (IR), high cis-polybutadiene rubber (high cis-BR), low cis-polybutadiene rubber (low cis-BR), 1,2-polybutadiene (1,2-BR), emulsion-polymerized or solution-polymerized styrene butadiene rubber (SBR), ethylene-propylene-diene rubber (EPDM), nitrile rubber (NBR), butyl rubber (IIR), chloroprene rubber (CR) and the like. Further, capable of being used as well are derivatives of the above rubbers, for example, polybutadiene rubbers modified with tin compounds and rubbers obtained by modifying the rubbers described above with epoxy, silane and maleic acid.

Among them, natural rubber and/or polyisoprene rubber are particularly preferred.

The above diene base rubbers (B) can be used alone or in combination of two or more kinds thereof.

Thermoplastic polymer (C):

The thermoplastic polymer (C) includes styrene base resins, ABS resins, AES resins, AAS resins, styrene base thermoplastic elastomers, ethylene-vinyl acetate copolymers, 1,2-polybutadiene resins and the like.

Among them, preferred are polystyrene, styrene-butadiene copolymers, acrylonitrile-styrene copolymers, styrene-butadiene-styrene block copolymers (SBS), styreneisoprene-styrene block copolymers (SIS), styrene-ethylene·butylene-styrene block copolymers (SEBS), ethylene-vinyl acetate copolymers and 1,2-polybutadiene resins. Among them, particularly preferred is at least one selected from the styrene-butadiene copolymers having a styrene unit content of 30 to 90 mass %, preferably 35 to 80 mass %, the ethylene-vinyl acetate copolymers having a vinyl acetate unit content of 5 to 30 mass %, preferably 10 to 25 mass % and the 1,2-polybutadiene resins having a melting point of 70 to 150°C. The above thermoplastic polymer (C) added in a suitable amount makes it possible to provide the rubber composition with a suitable hardness and a suitable impact resistance.

Rubber reinforcing material (D):

The rubber reinforcing material (D) includes inorganic reinforcing materials such as silica, carbon black, activated calcium carbonate, ultrafine particle magnesium silicate and the like and organic reinforcing materials such as polyolefin resins including polyethylene resins, polypropylene resins and the like, phenol resins, lignin, modified melamine resins, coumarone indene resins and petroleum resins.

Among them, silica and/or carbon black are preferred. Among them, preferred are silicas having an average primary particle diameter of 5 to 100 nm such as silicic anhydride prepared by a dry method, silicic acid hydrate prepared by a wet method, synthesized silicates and the like and carbon blacks having a particle diameter of 90 nm or less and a dibutyl phthalate (DBP) absorption of 70 ml/100g or more. The carbon black includes furnace black, channel black, thermal black and the like, and to be specific, it includes ASTM code No. N110, S212, N242, S315, N330, N550, N660, N765 and the like.

In the rubber composition for shoe soles according to the present invention, 100 mass parts of the polymer component comprising 10 to 90 mass %, preferably 20 to 80 mass % of the vinyl/cis-polybutadiene rubber (A-1), 10 to 50 mass %, preferably 10 to 40 mass % of the diene base rubber (B) other than the component (A-1) and 2 to 50 mass %, preferably 5 to 40 mass % of the thermoplastic polymer (C) is blended with 2 to 50 mass parts, preferably 5 to 40 mass % of the rubber reinforcing material (D).

If the blend proportions of the respective components described above fall in the ranges described above, capable of being prepared is the rubber composition for shoe soles which is lightweight and has an appropriate hardness and which is excellent in a tear strength, an abrasion resistance and a gripping property, and the problem that a viscosity of the composition is too large and makes kneading difficult to deteriorate the molding property is not brought about.

A vulcanizing agent and a vulcanization accelerating agent can be added to the composition of the present invention.

The vulcanizing agent includes sulfur, compounds which produce sulfur by heating, organic peroxides, metal oxides such as magnesium oxide and the like, multifunctional monomers, silanol compounds and the like. The compounds which produce sulfur by heating include tetramethylthiuram disulfide, tetraethylthiuram disulfide and the like.

The vulcanization accelerating agent includes, for example, aldehydes, ammonias, amines, guanidines, thioureas, thiazoles, thiurams, dithiocarbamates, xanthates and the like, and to be more specific, it includes tetramethylthiuram disulfide (TMTD), N-oxydiethylene-2-benzothiazolylsulfenamide (OBS), N-cyclohexyl-2-benzothiazylsulfenamide (CBS), dibenzothiazyl disulfide (MBTS), 2-mercaptobenzothiazole (MBT), zinc di-n-butyldithiocarbamate (ZnBDC), zinc dimethyldithiocarbamate (ZnMDC) and the like.

In addition to the above compounds, publicly known additives which are usually used for rubber compositions such as antioxidants, fillers, process oils, zinc oxide, stearic acid and the like can be used if necessary.

The antioxidants include amine/ketone base antioxidants, imidazole base antioxidants, amine base antioxidants, phenol base antioxidants, sulfur base antioxidants, phosphorus base antioxidants and the like. To be more specific, the antioxidants include 2,6-di-t-butyl-p-cresol (BHT) of a phenol base, trinonylphenyl phosphite (TNP) of a phosphorus base, 4,6-bis(octylthiomethyl)-o-cresol and dilauryl-3,3'-thiodipropionate (TPL) of a sulfur base and the like.

The fillers include inorganic fillers such as calcium carbonate, basic magnesium carbonate, clay, litharge, diatomaceous earth and the like and organic fillers such as regenerated rubbers, powder rubbers and the like, and the process oils include process oils of an aromatic base, a naphthene base and a paraffin base.

The composition of the present invention can be obtained by kneading the respective components described above by means of a Banbury mixer, an open roll, a kneader, a double shaft kneading machine and the like which are usually used. The kneading temperature has to be lower than a melting point of the 1,2-polybutadiene crystalline fibers contained in the above vinyl/cis-polybutadiene. If the composition is kneaded at a higher temperature than a melting point of the 1,2-polybutadiene crystalline fibers, fine short fibers contained in the vinyl/cis-polybutadiene are molten and transformed into spherical particles and the like, and therefore it is not preferred.

Rubber composition for shoe soles according to the second embodiment:

In the second embodiment of the present invention, the vinyl/cis-polybutadiene rubber (A) in the rubber composition for shoe soles described above is a vinyl/cis-polybutadiene rubber (A-2) obtained by:

(1) adding a catalyst comprising an organic aluminum compound and a soluble cobalt compound to a mixture comprising 1,3-butadiene and a hydrocarbon base solvent having a solubility parameter (SP value) of 9.0 or less as principal components to subject 1,3-butadiene to cis-1,4-polymerization to thereby produce 1,4-cis-polybutadiene (a), wherein an organic aluminum compound represented by a formula $AlR_nX_{3-n}$ (wherein R is an alkyl group having 1 to 6 carbon atoms, a phenyl group or a cycloalkyl group; X is a halogen element; and n is a number of 1.5 to 2) is used as the organic aluminum compound and

(2) then subjecting the polymerization reaction mixture thus obtained to 1,2-polymerization with 1,3-butadiene in the presence of a catalyst comprising a soluble cobalt compound, an organic aluminum compound represented by a formula $AlR_3$ (wherein R is an alkyl group having 1 to 6 carbon atoms, a phenyl group or a cycloalkyl group) and carbon disulfide after adding 1,3-butadiene to the above polymerization reaction mixture or without adding 1,3-butadiene thereto to produce 1,2-polybutadiene crystalline fibers (b) having a melting point of 170°C or higher.

Vinyl/cis-polybutadiene rubber (A-2):

The vinyl/cis-polybutadiene rubber (A-2) used in the second embodiment of the present invention comprises the 1,4-cis-polybutadiene (a) and the specific 1,2-polybutadiene crystalline fibers (b).

The 1,2-polybutadiene crystalline fibers (b) in the vinyl/cis-polybutadiene rubber (A-2) are partially dispersed in a form in which they are monodispersed as fine crystals in the cis-polybutadiene (a) as a matrix of the vinyl/cis-polybutadiene rubber (A-2), and they are coexistent with large crystalline fibers having an aggregation structure. The above monodispersed fine crystalline short fibers enhance an interfacial affinity with the matrix rubber components.

The vinyl/cis-polybutadiene rubber (A-2) has a Mooney viscosity of 20 to 150, preferably 30 to 80, and a content of the 1,2-polybutadiene crystalline fibers (b) is 1 to 40 mass parts, preferably 1 to 30 mass parts. If they fall in the ranges described above, the crystalline short fibers of the 1,2-polybutadiene crystalline fibers (b) in the 1,4-cis-polybutadiene (a) do not grow large, and the high elastic modulus can be developed. In addition thereto, the problem that the processability is deteriorated is not brought about.

The 1,4-cis-polybutadiene (a) is preferably the same as described in the first embodiment from the viewpoint of the processability, the abrasion resistance and the like, and the values thereof fall preferably in the suited ranges since a balance between various physical properties such as the high elastic modulus, the excellent processability and the like can be held.

The 1,2-polybutadiene crystalline fibers (b) also are preferably the same as described in the first embodiment. Almost all part of conventional vinyl/cis-polybutadiene rubbers comprises crystalline fibers having a large aggregation structure, and the number of the crystalline fibers having a fiber length of 200 nm or less is 70 fibers or less per 25 $\mu m^2$.

The vinyl/cis-polybutadiene rubber (A-2) described above can suitably be obtained, for example, by the following production process.

Step (1):

First, 1,3-butadiene is mixed with a hydrocarbon base solvent having a solubility parameter (SP value) of 9.0 or less, preferably 8.5 or less to subject 1,3-butadiene to cis-1,4-polymerization.

Use of the solvent having an SP value smaller than 9.0 improves the dispersion of the 1,2-polybutadiene crystalline fibers (b) into the 1,4-cis-polybutadiene (a) and makes it possible to develop the excellent tear strength and the excellent abrasion resistance. On the other hand, if a solvent having an SP value exceeding 9.0 is used, it is difficult to form a dispersion state of the 1,2-polybutadiene crystalline fibers (b) into the 1,4-cis-polybutadiene (a) as is the case with the present invention. Accordingly, a balance between various physical properties such as the high elastic modulus, the excellent processability and the like is broken in a certain case, and it is not necessarily preferred.

The solvent having an SP value of 9.0 or less includes, for example, n-hexane (SP value: 7.2), n-pentane (SP value: 7.0), n-octane (SP value: 7.5), cyclohexane (SP value: 8.1), n-butane (SP value: 6.6) and the like. Among them, cyclohexane and n-hexane are particularly preferred. The solubility parameter (SP value) is shown by a square root $((cal/cm^3)^{1/2})$ of evaporation heat required for evaporating a liquid of 1 molar volume, and it is publicly known by documents such as Rubber Industry Handbook (4th edition, edited by the Society of Rubber Industry, Japan on January 20, 1994, p. 720 to 721) and the like. The above hydrocarbon base solvents can be used alone or in combination of two or more kinds thereof, and a solvent obtained by combining two or more kinds of the solvents can be provided with an SP value of 9.0 or less.

The mixture comprising 1,3-butadiene and the hydrocarbon base solvent described above as principal components which is obtained by mixing both components is preferably controlled, as described in the first embodiment, in a concentration of moisture contained in the mixed medium before brought into contact with the halogen-containing organic aluminum compound which is the catalyst component.

The moisture falls in a range of preferably 0.1 to 1.0 mole, particularly preferably 0.2 to 1.0 mole per mole of the organic aluminum halogen compound (for example, organic aluminum chloride) which is the catalyst component in the mixed medium described above.

The moisture falling in the above range makes it possible to effectively control a reduction in the catalyst activity, a reduction in the cis-1,4 structure content, an abnormal variation in the molecular weight, gel produced in the polymerization and the like, and no gel is adhered onto the polymerization bath, so that the continuous polymerization time can be extended.

The organic aluminum halogen compound is added to the solution obtained after controlling a concentration of moisture. The organic aluminum halogen compound includes a compound represented by a formula $AlR_nX_{3-n}$ (wherein R is an alkyl group having 1 to 6 carbon atoms, a phenyl group or a cycloalkyl group; X is a halogen element; and n is a number of 1 to 2). The specific examples of the organic aluminum halogen compound and a use amount thereof are the same as those of the organic aluminum halogen compound (II) described in the first embodiment.

Next, a soluble cobalt compound is added to the mixed medium to which organic aluminum chloride is added, and cis-1,4-polymerization is carried out. The soluble cobalt compound is preferably a compound which is soluble or can homogeneously be dispersed in an inactive medium comprising a hydrocarbon base solvent having an SP value of 8.5 or less as a principal component or liquid 1,3-butadiene. The soluble cobalt compound and a use amount thereof are the same as described in the first embodiment.

Further, organic carboxylic acid salts of nickel, organic complex salts of nickel, organic lithium compounds, organic carboxylic acid salts of neodymium and organic complex salts of neodymium can be used as well in addition to the soluble cobalt compound.

The reaction conditions for carrying out the cis-1,4-polymerization, the polymerization bath and a molecular weight controlling agent and a gelation inhibitor which can be used are the same as described in the first embodiment.

The 1,4-cis-polybutadiene (a) thus obtained has the same cis-1,4 structure content, Mooney viscosity (ML1 + 4, 100°C) and the like as described in the first embodiment, and it does not substantially contain a toluene-insoluble part (gel).

Step (2):

An organic aluminum compound represented by a formula AlR$_3$ (wherein R is the same as described above) and carbon disulfide and, if necessary, the soluble cobalt compound described above are added after adding 1,3-butadiene to the polymerization reaction mixture obtained in the manner described above or without adding 1,3-butadiene to subject the above polymerization reaction mixture to 1,2-polymerization with 1,3-butadiene, whereby a vinyl/cis-polybutadiene rubber (A-2) in which 1 to 40 mass % of the 1,2-polybutadiene crystalline fibers (b) having a melting point of 170°C or higher are dispersed in a matrix comprising the 1,4-cis-polybutadiene (a) can be produced.

The organic aluminum compound represented by the formula AlR$_3$ and a use amount thereof are the same as described in the first embodiment.

Carbon disulfide which can be used in combination with the organic aluminum compound shall not specifically be restricted and does not preferably contain moisture. A concentration of carbon disulfide is preferably 20 mmol/L or less, particularly preferably 0.01 to 10 mmol/L. Publicly known phenyl isothiocyanate and xanthogenic acid compounds may be used as an alternative for carbon disulfide.

A temperature at which 1,3-butadiene is subjected to 1,2-polymerization is preferably 100°C or lower, more preferably -5 to 80°C and particularly preferably -5 to 50°C.

A yield of the 1,2-polybutadiene in the 1,2-polymerization can be increased by adding 1,3-butadiene to the polymerization reaction system in carrying out the 1,2-polymerization in an amount of 1 to 50 mass parts, preferably 1 to 20 mass parts per 100 mass parts of the cis polymerization liquid described above.

The polymerization time (average residence time) falls in a range of preferably 10 minutes to 2 hours. The 1,2-polymerization is preferably carried out so that the polymer concentration after the 1,2-polymerization is 9 to 29 mass %. A single bath or a bath obtained by connecting two or more baths can be used for the polymerization bath. The polymerization is carried out by stirring and mixing the polymerization solution in the polymerization bath (polymerization vessel). The polymerization solution is further increased in a viscosity during the 1,2-polymerization, and the polymer is liable to be adhered, so that a polymerization bath equipped with a high viscosity liquid stirring device, for example, an equipment described in Japanese Patent Publication No. 2645/1965 can be used as the polymerization bath used for the 1,2-polymerization.

A publicly known antioxidant can be added according to an ordinary method after the polymerization reaction reaches a prescribed polymerization rate. The usable antioxidants are the same as described in the first embodiment. An addition amount of the antioxidant is 0.001 to 5 mass parts per 100 mass parts of the vinyl/cis-polybutadiene rubber. Next, a polymerization terminating agent is added to the polymerization system to terminate the polymerization. The termination can be carried out, for example, by a publicly known method such as a method in which a polymerization reaction solution is supplied to a polymerization terminating bath after the polymerization reaction is finished and in which a large amount of a polar solvent such as alcohol including methanol, ethanol and the like or water is added to the above polymerization reaction solution and a method in which an inorganic acid such as hydrochloric acid, sulfuric acid and the like, an organic acid such as acetic acid, benzoic acid and the like or hydrogen chloride gas is introduced into a polymerization solution. Then, the vinyl/cis-polybutadiene rubber (A-2) produced is obtained by separating, washing and drying by conventional methods.

1,3-Butadiene and the inactive medium are separated by distillation from a mixture containing unreacted 1,3-butadiene, the inactive medium and carbon disulfide in a remnant left after separating and obtaining the vinyl/cis-polybutadiene rubber (A-2). On the other hand, carbon disulfide is separated and removed by adsorption separating treatment of carbon disulfide or separating treatment of a carbon disulfide adduct to recover 1,3-butadiene and the inactive medium which do not substantially contain carbon disulfide.

Further, 1,3-butadiene and the inactive medium which do not substantially contain carbon disulfide can be recovered as well by recovering three components from the mixture described above by distillation and separating and removing carbon disulfide from this distillate by the adsorption separating treatment of carbon disulfide or the separating treatment of a carbon disulfide adduct each described above. The carbon disulfide and the inactive medium recovered in the manner described above are used after mixing 1,3-butadiene newly supplied.

Continuous production carried out according to the above method provides the catalyst components with an excellent operability and makes it possible to continuously produce the vinyl/cis-polybutadiene rubber (A-2) industrially advantageously at a high catalyst efficiency. In particular, the rubber component is not adhered onto an inner wall of the polymerization bath, the stirring blades and other parts in which stirring is slow, and the continuous production can be carried out industrially advantageously at a high conversion rate.

However, the polymerization process shall not specifically be restricted, and the production can be carried out by either continuous polymerization or batch polymerization.

In the rubber composition for shoe soles according to the second embodiment of the present invention, the vinyl/cis-polybutadiene rubber (A-2) is used in place of the vinyl/cis-polybutadiene rubber (A-1) in the rubber composition for shoe soles according to the first embodiment. The diene base rubber (B) other than the component (A-2), the thermoplastic polymer (C), the rubber reinforcing material (D) and a vulcanizing agent, a vulcanization accelerating agent, an antioxidant, a filler, a process oil, zinc oxide, stearic acid and the like which are optional components are the same as described in the first embodiment.

If the blend proportions of the respective components described above fall in the ranges described above, capable of being prepared is the rubber composition for shoe soles which is lightweight and has an appropriate hardness and which is excellent in a tensile strength, a tear strength, an abrasion resistance and a gripping property, and the problems that a viscosity of the composition is too large to make kneading difficult and that the molding property is deteriorated are not brought about.

Rubber composition for shoe soles according to the third embodiment:

In the third embodiment of the present invention, the vinyl/cis-polybutadiene rubber (A) in the rubber composition for shoe soles described above is a vinyl/cis-polybutadiene rubber (A-3) obtained by:

(1) adding a catalyst comprising an organic aluminum compound and a soluble cobalt compound to a mixture comprising 1,3-butadiene and a hydrocarbon base solvent as principal components to subject 1,3-butadiene to cis-1,4-polymerization to thereby produce 1,4-cis-polybutadiene (a),

(2) subjecting the polymerization reaction mixture thus obtained to 1,2-polymerization with 1,3-butadiene in the presence of a catalyst comprising a soluble cobalt compound, an organic aluminum compound represented by a formula $AlR_3$ (wherein R is an alkyl group having 1 to 6 carbon atoms, a phenyl group or a cycloalkyl group) and carbon disulfide after adding 1,3-butadiene to the above polymerization reaction mixture or without adding 1,3-butadiene thereto to produce 1,2-polybutadiene crystalline fibers (b) having a melting point of 170°C or higher and

(3) thereby obtaining vinyl/cis-polybutadiene (A-4) in which the 1,2-polybutadiene crystalline fibers (b) are dispersed in a matrix comprising the 1,4-cis-polybutadiene (a) and solution-mixing the vinyl/cis-polybutadiene (A-4) with 1,4-cis-polybutadiene (a-4).

Vinyl/cis-polybutadiene rubber (A-3):

The vinyl/cis-polybutadiene rubber (A-3) used in the third embodiment of the present invention is produced through the step described above, whereby it is provided with excellent mechanical characteristics.

Step (1):

First, 1,3-butadiene is mixed with a hydrocarbon base solvent to subject 1,3-butadiene to cis-1,4-polymerization. The hydrocarbon base solvent is the same as described in the first embodiment.

The mixture comprising 1,3-butadiene and the hydrocarbon base solvent as principal components which is obtained by mixing both components is preferably controlled, as described in the first embodiment, in a concentration of moisture contained in the mixture before brought into contact with the organic aluminum compound which is the catalyst component. Controlling of the moisture concentration, the organic aluminum compound which can be used, the soluble cobalt compound and the use amounts thereof are the same as described in the first embodiment.

The organic carboxylic acid salts of nickel, the organic complex salts of nickel, the organic lithium compounds, the organic carboxylic acid salts of neodymium and the organic complex salts of neodymium each described above can be used as well in combination as one component of the catalyst.

The reaction conditions for carrying out the cis-1,4-polymerization, the polymerization bath and the molecular weight controlling agent and the gelation inhibitor which can be used are the same as described in the first embodiment.

The 1,4-cis-polybutadiene (a) obtained above has the same cis-1,4 structure content, Mooney viscosity (ML1 + 4, 100°C) and the like as described in the first embodiment. The 5 mass % toluene solution has a viscosity of preferably 30 to 250 centipoise (cp), more preferably 50 to 200 cp and particularly preferably 100 to 200 cp from the viewpoint of the strength, the abrasion resistance and the like, and a toluene-insoluble part (gel) is not substantially contained.

Step (2):

Then, the catalyst comprising the organic aluminum compound represented by a formula $AlR_3$ (wherein R is an alkyl group having 1 to 6 carbon atoms, a phenyl group or a cycloalkyl group) and carbon disulfide and, if necessary, the soluble cobalt compound described above are added after adding 1,3-butadiene to the polymerization reaction mixture containing the cis-1,4-polymer described above or without adding 1,3-butadiene thereto to subject the above polymerization reaction mixture to 1,2-polymerization with 1,3-butadiene, whereby the vinyl/cis-polybutadiene rubber (A-4) in which the 1,2-polybutadiene crystalline fibers (b) having a melting point of 170°C or higher are dispersed in a matrix comprising the 1,4-cis-polybutadiene (a) can be produced.

The organic aluminum compound represented by a formula $AlR_3$, carbon disulfide, the alternative for carbon disulfide and the use amounts thereof are the same as described in the first embodiment.

The reaction conditions for carrying out the 1,2-polymerization and the polymerization bath also are the same as described in the first embodiment.

When producing the vinyl/cis-polybutadiene (A-4), a step in which an unsaturated high molecular compound is added to the mixture comprising 1,3-butadiene and the hydrocarbon base solvent as principal components and stirred to dissolve it can be added before the cis-1,4-polymerization or the 1,2-polymerization.

The unsaturated high molecular compound is the same as described in the first embodiment. In particular, polyisoprene, styrene/isoprene/styrene block copolymers and 1,2-polybutadiene having a melting point of 70 to 110°C are preferred. An addition amount of the unsaturated high molecular compound is preferably 0.1 to 30 mass %, more preferably 1 to 20 mass % based on the vinyl/cis-polybutadiene rubber (A-3) obtained.

The publicly known antioxidant described above can be added by a conventional method after the 1,2-polymerization reaction reaches a prescribed polymerization rate. An addition amount of the antioxidant is 0.001 to 5 mass parts per 100 mass parts of the vinyl/cis-polybutadiene rubber (A-4).

Next, a polymerization terminating agent is added, as described in the first embodiment, to the polymerization reaction system to terminate the polymerization. Then, the vinyl/cis-polybutadiene rubber (A-4) produced is obtained by separating, washing and drying by conventional methods, and unreacted 1,3-butadiene, the hydrocarbon base organic solvent and, in certain case, carbon disulfide in the remnant can be recovered by distilling, adsorbing and separating treatments.

According to the above method, and the vinyl/cis-polybutadiene rubber (A-4) can be produced industrially advantageously at a high catalyst efficiency with an excellent operability of the catalyst components. In particular, the rubber component is not adhered onto an inner wall of the polymerization bath, the stirring blades and other parts in which stirring is slow, and continuous production can be carried out industrially advantageously at a high conversion rate.

A proportion of a boiling n-hexane-insoluble part (1,2-polybutadiene crystalline fibers (b)) of the vinyl/cis-polybutadiene rubber (A-4) thus obtained is preferably 10 to 60 mass %, more preferably 20 to 50 mass % and particularly preferably 20 to 40 mass % from the viewpoint of the productivity. The boiling n-hexane-insoluble part comprises syndiotactic 1,2-polybutadiene and is a value obtained by boiling and extracting 2 g of the vinyl/cis-polybutadiene rubber in 200 ml of n-hexane for 4 hours by a Soxhlet extractor and showing the extract remnant by mass part.

On the other hand, in the boiling n-hexane-soluble part (1,4-cis-polybutadiene (a)) of the vinyl/cis-polybutadiene rubber (A-4), a micro structure thereof comprises the 1,4-cis-polybutadiene having a 1,4-cis structure content of preferably 80 mol % or more, more preferably 90 mol % or more.

Step (3):

In the step (3), the vinyl/cis-polybutadiene (A-4) in which the 1,2-polybutadiene crystalline fibers (b) are dispersed in a matrix comprising the cis-polybutadiene (a) is solution-mixed with the 1,4-cis-polybutadiene (a-4) to produce the vinyl/cis-polybutadiene rubber (A-3). A mass ratio (vinyl/cis-polybutadiene (A-4)/1,4-cis-polybutadiene (a-4)) of the vinyl/cis-polybutadiene (A-4) to the 1,4-cis-polybutadiene (a-4) is preferably 10 to 50/90 to 50.

The 1,4-cis-polybutadiene (a-4) can be produced by adding a cis-1,4-polymerization catalyst to subject 1,3-butadiene to cis-1,4-polymerization in the same manner as in the precedent step in the production process for the vinyl/cis-polybutadiene (A-4). Also, the cis-polybutadiene solution obtained in the precedent step in the production process for the vinyl/cis-polybutadiene (A-4) may be used as it is. Further, cis-polybutadiene obtained by using a catalyst other than the catalyst (the catalyst comprising the organic aluminum compound and the soluble cobalt compound) used in the step (1) can be used as well.

The 1,4-cis-polybutadiene mixed in the step (3) has preferably a smaller Mooney viscosity than that of the 1,4-cis-polybutadiene (a) obtained in the step (1). That is, the 1,4-cis-polybutadiene (a) obtained in the step (1) has a Mooney viscosity (ML1 + 4, 100°C) of preferably 10 to 130, more preferably 15 to 80, but the 1,4-cis-polybutadiene mixed in the step (3) has a Mooney viscosity (ML1 + 4, 100°C) which is smaller than a Mooney viscosity (ML1 + 4, 100°C) of the 1,4-cis-polybutadiene (a) obtained in the step (1) by preferably 5 or more, more preferably 10 or more and particularly preferably 15 or more.

When using the above 1,4-cis-polybutadiene (a-4), the hydrocarbon base solvent used, the controlling condition of the moisture concentration, the 1,2-polymerization conditions and the like are the same as described above. A concentration of the 1,4-cis-polybutadiene (a-4) in the mixture controlled in a moisture concentration comprising 1,3-butadiene and the hydrocarbon base solvent as principal components is preferably 1 to 30 mass %.

The vinyl/cis-polybutadiene (A-3) obtained above comprises a structure in which the 1,2-polybutadiene crystalline fibers (b) (boiling n-hexane-insoluble part) are dispersed in a proportion of preferably 1 to 40 mass %, more preferably 1 to 30 mass % and particularly preferably 1 to 20 mass % in a matrix comprising the 1,4-cis-polybutadiene (a) having a 1,4-cis structure content of 80 mol % or more obtained in the step (1) and the 1,4-cis-polybutadiene (a-4) obtained in the step (3).

In the rubber composition for shoe soles according to the third embodiment of the present invention, the vinyl/cis-polybutadiene rubber (A-3) is used in place of the vinyl/cis-polybutadiene rubber (A-1) in the rubber composition for shoe soles according to the first embodiment. The diene base rubber (B) other than the component (A-3), the thermoplastic polymer (C), the rubber reinforcing material (D) and the vulcanizing agent, the vulcanization accelerating agent, the antioxidant, the filler, the process oil, zinc oxide, stearic acid and the like which are optional components are the same as described in the first embodiment.

Rubber foam composition for shoe soles:

The rubber foam composition for shoe soles according to the present invention is obtained by foaming the rubber compositions for shoe soles according to the first embodiment to the third embodiment of the present invention. A production process for the foam shall not specifically be restricted, and any of a chemical foaming method and a physical foaming method can be employed.

Publicly known inorganic foaming agents and organic foaming agents can be used for the foaming agent. They include, for example, sodium bicarbonate, ammonium bicarbonate, sodium carbonate, ammonium carbonate, azodicarbonamide (ADCA), dinitrosopentamethylenetetramine (DNPT), p,p'-oxybisbenzenesulfonylhydrazine (OBSH), dinitrosoterephtalamide, azobisisobutyronitrile, barium azodicarboxylate, sulfonylhydrazides such as toluenesulfonylhydrazid and the like. Among them, azodicarbonamide (ADCA), dinitrosopentamethylenetetramine (DNPT) and p,p'-oxybisbenzenesulfonylhydrazine (OBSH) are preferred. The above foaming agents may be used in combination with publicly known foaming auxiliary agents such as urea, urea derivatives and the like.

An addition amount of the foaming agent is varied depending on the kind of the polymers, and it is 0.5 to 20 mass parts, preferably 1 to 15 mass parts per 100 mass parts of the rubber composition. The foaming auxiliary agent can be used in an amount of 10 to 200 % of the foaming agent.

The rubber foam composition for shoe soles according to the present invention can be blended with publicly known additives which are usually used for rubber foam compositions such as vulcanizing agents, vulcanization accelerating agents, antioxidants, fillers, process oils, zinc oxide, stearic acid and the like which are the same as described above. The composition can be blended and molded by conventional methods.

Outsole for shoes:

The present invention provides as well outsoles for shoes characterized by using the rubber compositions for shoe soles according to the first embodiment to the third embodiment and the rubber foam compositions for shoe soles obtained by foaming the above rubber compositions.

A shoe is constituted by an outsole, an upper, an insole and the like. The outsole has to grip the ground in movements of landing and kicking, and therefore the mechanical strength and the gripping property are important. The rubber composition for shoe soles according to the present invention and the rubber foam composition for shoe soles obtained by foaming the above rubber composition have an appropriate hardness and are excellent in a tensile strength, a tear strength, an abrasion resistance and a gripping property, and therefore they are particularly preferably used for outsoles.

Shoes to which they can be applied include men's shoes, ladies' shoes and in addition thereto, sport shoes such as golf shoes, tennis shoes, soccer shoes, jogging shoes, trekking shoes, town shoes and the like.

The outsole can be produced by a publicly known method using a molding die equipped with an upper mold and a lower mold. For example, an upper mold is moved down to a lower mold filled with the composition of the present invention, pressed and heated, whereby the outsole can be formed.

EXAMPLES

The present invention shall be explained in further details below with reference to production examples, examples and comparative examples, but the present invention shall not be restricted to them. In the following examples, "%" and "parts" are "mass %" and "mass parts" unless otherwise described.

Production Example 1 (production example of the first embodiment)

Production of vinyl/cis-polybutadiene rubber (A-1):

A stainless-made reaction bath equipped with a stirrer having an inner content of 5 L which was substituted with nitrogen gas was charged with 3.5 L of a polymerization solution (1,3-butadiene: 30 %, cyclohexane: 70 %), and 5.3 mmol of water, 10.5 mmol of diethylaluminum chloride, 1.8 mmol of carbon disulfide, 32 mmol of cyclooctadiene and 0.03 mmol of cobalt octoate were added thereto and stirred at 50°C for 30 minutes to subject 1,3-butadiene to cis-1,4-polymerization, whereby cis-polybutadiene (a-1) was produced.
Added to the polymerization product liquid obtained was 10 mass % (percentage to the vinyl/cis-polybutadiene rubber obtained) of polyisoprene (IR) (Mooney viscosity (ML1 + 4, 100°C): 87, cis-1,4 structure content: 98 mol %), and the liquid was stirred at 50°C for one hour. Then, 560 ml of 1,3-butadiene, 4.5 mmol of water, 13.4 mmol of triethylaluminum chloride and 0.07 mmol of cobalt octoate were added thereto, and the liquid was stirred at 50°C for 30 minutes to produce 1,2-polybutadiene crystalline fibers (b-1). A methanol solution of 4,6-bis(octylthiomethyl)-o-cresol as an antioxidant was added thereto, and the polymerization was terminated. Then, unreacted butadiene and 2-butenes were removed by vaporization, and the residue was dried under vacuum at 105°C for 60 minutes to obtain a vinyl/cis-polybutadiene rubber (A-1). An adsorption proportion (graft rate) of polyisoprene onto the 1,2-polybutadiene crystalline fibers (b-1) which was calculated from infrared absorption spectral analysis of a boiling n-hexane-insoluble part of the vinyl/cis-polybutadiene rubber (A-1) thus obtained was 67 %. The physical properties thereof are shown in Table I-1.

Production Example 2 (production example of the second embodiment)

Production of vinyl/cis-polybutadiene rubber (A-2):

A vinyl/cis-polybutadiene rubber (A-2) was obtained in the same manner as in Production Example 1, except that in Production Example 1, the polymerization solution was changed to (butadiene: 31 %, 2-butenes: 29 % and cyclohexane: 40 %) and that the unsaturated high molecular compound (polyisoprene) was not added. The physical properties thereof are shown in Table I-1.

Production Example 3 (production example of the third embodiment)

Production of vinyl/cis-polybutadiene rubber (A-3):

(i) Production of vinyl/cis-polybutadiene (A-4):

A stainless-made reaction bath equipped with a stirrer having an inner content of 1.5 L which was substituted with nitrogen gas was charged with 1.0 L of a polymerization solution (1,3-butadiene: 31 %, 2-butenes: 29 % and cyclohexane: 40 %), and 1.7 mmol of water, 2.9 mmol of diethylaluminum chloride, 0.3 mmol of carbon disulfide, 6 mmol of cyclooctadiene and 0.008 mmol of cobalt octoate were added thereto and stirred at 40°C for 20 minutes to subject 1,3-butadiene to cis-1,4-polymerization, whereby 1,4-cis-polybutadiene (a-3) was produced. Then, a small amount of the cis-polybutadiene polymerization liquid was taken out from the reaction bath, and a viscosity of a toluene solution of the cis-polybutadiene rubber obtained after drying the polymerization liquid was measured to find that it was 175 cp. Added to the polymerization product liquid obtained were 150 ml of butadiene, 1.1 mmol of water, 3.5 mmol of triethylaluminum chloride and 0.02 mmol of cobalt octoate, and the liquid was stirred at 40°C for 20 minutes to subject butadiene to 1,2-polymerization, whereby 1,2-polybutadiene crystalline fibers (b-3) was produced. A methanol solution of 4,6-bis(octylthiomethyl)-o-cresol as an antioxidant was added thereto, and the polymerization was terminated. Then, unreacted butadiene and 2-butenes were removed by vaporization to obtain a vinyl/cis-polybutadiene (A-4) having a boiling n-hexane-insoluble part of 40.5 %. The vinyl/cis-polybutadiene (A-4) 60 g was dissolved in cyclohexane to prepare a vinyl/cis-polybutadiene solution.

(ii) Production of 1,4-cis-polybutadiene (a-4)

A stainless-made reaction bath equipped with a stirrer having an inner content of 5 L which was substituted with nitrogen gas was charged with 3.5 L of a polymerization solution (1,3-butadiene: 31 %, 2-butenes: 29 % and cyclohexane: 40 %), and 5.3 mmol of water, 10.5 mmol of diethylaluminum chloride, 1.8 mmol of carbon disulfide, 32 mmol of cyclooctadiene and 0.03 mmol of cobalt octoate were added thereto and stirred at 50°C for 30 minutes to subject 1,3-butadiene to 1,4-polymerization, whereby 1,4-cis-polybutadiene (a-4) was produced. A methanol solution of 4,6-bis (octylthiomethyl)-o-cresol as an antioxidant was added thereto, and the polymerization was terminated. Then, unreacted butadiene and 2-butenes were removed by vaporization to obtain 1,4-cis-polybutadiene (a-4). The 1,4-cis-polybutadiene (a-4) 140 g was dissolved in cyclohexane to prepare a 1,4-cis-polybutadiene (a-4)/cyclohexane solution.

(iii) Production of vinyl/cis-polybutadiene rubber (A-3):

A stainless-made reaction bath equipped with a stirrer having an inner content of 5.0 L which was substituted with nitrogen gas was charged with the cis-polybutadiene (a-4)/cyclohexane solution in which 140 g of the 1,4-cis-polybutadiene (a-4) was dissolved, and the vinyl/cis-polybutadiene/cyclohexane solution containing 60 g of the vinyl/cis-polybutadiene (A-4) was added thereto while stirring. After stirring for one hour, the solution was dried under vacuum at 105°C for 60 minutes to obtain 200 g of a vinyl/cis-polybutadiene rubber (A-3) which was a mixture of the vinyl/cis-polybutadiene (A-4) and the 1,4-cis-polybutadiene (a-4). The physical properties of the vinyl/cis-polybutadiene rubber (A-3) and the vinyl/cis-polybutadiene (A-4) are shown in Table I-1 and Table I-2.

Comparative Production Example 1

Production of vinyl/cis-polybutadiene rubber (A-5):

A vinyl/cis-polybutadiene rubber (A-5) was obtained in the same manner as in Production Example 1, except that in Production Example 1, the solvent was changed from cyclohexane to benzene and that the unsaturated high molecular compound (polyisoprene) was not added. The physical properties thereof are shown in Table I-1.

Table I-1

| | | Production Example | | | Comparative Production Example 1 |
|---|---|---|---|---|---|
| | | 1 | 2 | 3 | |
| Main solvent | (kind) | cyclohexane | cyclohexane | cyclohexane | Benzene |
| | (SP value) | 8.1 | 8.1 or less | 8.1 or less | 9.1 |
| Vinyl/cis-polybutadiene rubber (A) | (kind) | A-1 | A-2 | A-3 | A-5 |
| Mooney viscosity (ML1+4, 100°C) | | 65 | 63 | 68 | 52 |
| 1,2-polybutadiene crystalline fiber (b) | (mass %) | 12.3 | 12.1 | 12.2 | 12.1 |
| Polyisoprene | (mass %) | 10 | - | - | - |
| 1,4-cis-polybutadiene | (a) | a-1 | a-2 | a-3 + a-4 | a-5 |
| Mooney viscosity (ML1+4, 100°C) | | 31 | 32 | 38 | 31 |
| Intrinsic viscosity [η] | (dl/g) | 1.8 | 1.8 | 2.1 | 1.8 |
| Weight average molecular weight (Mw) | $\times 10^4$ | 43 | 43 | 48 | 43 |
| Toluene solution viscosity | (cp) | 56 | 58 | 72 | 57 |

(continued)

| Main solvent | (kind) | cyclohexane | cyclohexane | cyclohexane | Benzene |
|---|---|---|---|---|---|
| | (SP value) | 8.1 | 8.1 or less | 8.1 or less | 9.1 |
| cis-1,4-structure | (mol %) | 98.2 | 98.2 | 98.2 | 98.1 |
| Trans-1,4-structure | (mol %) | 0.9 | 0.9 | 0.9 | 1.0 |
| 1,2-structure | (mol %) | 0.9 | 0.9 | 0.9 | 0.9 |
| 1,2-polybutadiene crystalline fiber | (b) | b-1 | b-2 | b-3 | b-5 |
| $\eta_{sp}/c$ | | 1.8 | 1.6 | 1.7 | 1.5 |
| Melting point of crystalline fiber | (°C) | 202 | 202 | 203 | 201 |
| Average fiber length of crystalline fibers | (nm) | 121 | 192 | 156 | 434 |
| Number of crystalline fibers *1 fibers/25 $\mu m^2$ | | 137 | 105 | 123 | 61 |
| Average aspect ratio of crystalline fibers | | 2.1 | 3.4 | 2.8 | 4.1 |
| *1: Number of crystalline fibers having a fiber length of 200 nm or less | | | | | |

Table I-2

| | | Production Example 3 |
|---|---|---|
| Vinyl/cis-polybutadiene | (kind) | A-4 |
| 1,2-polybutadiene crystalline fiber (b-3) | (mass %) | 40.5 |
| 1,4-cis-polybutadiene | | |
| 1,4-cis-polybutadiene in (A-4) | (kind) | a-3 |
| Mooney viscosity (ML1 + 4, 100°C) | | 65 |
| Intrinsic viscosity [$\eta$] | (dl/g) | 2.8 |
| Toluene solution viscosity | (cp) | 175 |
| Cis-1,4-structure | (mol %) | 98.3 |
| Trans-1,4-structure | (mol %) | 0.9 |
| 1,2-structure | (mol %) | 0.8 |
| 1,4-cis-polybutadiene | (kind) | a-4 |
| Mooney viscosity (ML1 + 4, 100°C) | | 30 |
| Intrinsic viscosity [$\eta$] | (dl/g) | 1.7 |
| Toluene solution viscosity | (cp) | 55 |
| Cis-1,4-structure | (mol %) | 98.1 |
| Trans-1,4-structure | (mol %) | 1.0 |
| 1,2-structure | (mol %) | 0.9 |

Measuring methods of the physical properties are shown below.

(1) Mooney viscosity

Measured at 100°C according to JIS K6300.

(2) Intrinsic viscosity [η]

Measured according to the method described above.

(3) Weight average molecular weight

The weight average molecular weight (Mw) was determined in a tetrahydrofuran solution at 40°C based on a calibration curve using standard polystyrene by means of a gel permeation chromatography (GPC, HCL-802A, manufactured by Tosoh Corp.).

(4) Toluene solution viscosity

A viscosity of a 5 mass % toluene solution of the 1,4-cis-polybutadiene (a) at 25°C was measured and shown by centipoise (cp).

(5) Micro structure of 1,4-cis-polybutadiene (a)

Determined by infrared absorption spectral analysis of the rubber part. The micro structure was calculated from an absorption intensity ratio of an absorption peak of a 1,4-cis structure: 740 cm$^{-1}$, an absorption peak of a 1,4-trans structure: 967 cm$^{-1}$ and an absorption peak of a vinyl structure: 910 cm$^{-1}$.

(6) Content and melting point of 1,2-polybutadiene crystalline fiber (b)

A differential scanning colorimeter (DSC-50, manufactured by Shimadzu Corporation) was used to determine an endothermic curve at a heating speed of 10°C/minute, wherein a peak temperature thereof was set as the melting point, and the content was calculated from a heat absorbing amount thereof.

(7) Fiber form of crystalline fibers

The vinyl/cis-polybutadiene rubber was vulcanized in a mixed solution of sulfur monochloride and carbon disulfide, and a ultra thin section was cut out from the vulcanizate thereof by means of Ultramicrotome (manufactured by Leica AG.). The section was observed under a transmission type electron microscope (model H-7100FA, manufactured by Hitachi, Ltd.), and the photograph of 5000 magnifications was taken.

The photograph was binarized in a range of 25 $\mu m^2$ using an image analysis soft (Win ROOF, manufactured by Mitani Corporation) to determine a fiber length, an aspect ratio and an area of the crystalline fibers. Next, the average fiber lengths and the aspect ratios were averaged by multiplying the values of the respective crystalline fibers by an area ratio.

The number of the crystalline fibers was determined by calculating the number of the crystalline fibers having a fiber length of 200 nm or less per 1 mass % of the 1,2-polybutadiene crystalline fibers.

Examples and comparative examples in the first embodiment Examples I-1 to I-3 and Comparative Examples I-1 to I-3

The vinyl/cis-polybutadiene rubbers A-1 and A-5 obtained in Production Example 1 and Comparative Production Example 1 were used, and the blending materials excluding the vulcanization accelerating agent and sulfur out of the compositions shown in Table I-3 were kneaded at a maximum temperature controlled to 170 to 180°C by means of a Banbury mixer of 1.7 L for test. Then, the vulcanization accelerating agent and sulfur were added to the above kneaded material and kneaded on a 10 inch roll, and this was rolled out in a sheet form, followed by putting the sheet into a die and vulcanizing to obtain a vulcanizate. The vulcanization was carried out at 155°C for 10 minutes. The results thereof are shown in Table I-3.

In Table I-3, the 300 % tensile elastic modulus, the tensile strength, the breaking elongation, the tear strength and the Akron abrasion are relative values to the values obtained in Comparative Example I-2. In Comparative Example 1-2, the 300 % tensile elastic modulus was 5.3 MPa; the tensile strength was 15.2 MPa; the breaking elongation was 580 %; the tear strength was 55 N/mm; the Akron abrasion was 0.42 cc/3000 cycles; and the wet skid resistance was 27.

The details of symbols shown in Table I-3 are described below.

· SMR-L: natural rubber (standard Malaysian rubber)

· S-SBR: styrene-butadiene copolymer (block SBR, trade name: Asaprene 303, manufactured by Asahi Kasei Chemicals Corporation, styrene unit content: 46 mass %, Mooney viscosity (ML1 + 4, 100°C): 45)

· EVA: ethylene-vinyl acetate copolymer (trade name: V218, manufactured by Ube Industries, Ltd., vinyl acetate unit content: 18 %)

· Silica: (trade name: Nipsil VN3, manufactured by Tosoh Silica Corporation, average particle diameter: 16 nm)

· Other additives: polyethylene glycol (trade name: PEG #4000, manufactured by Sanyo Kasei Kogyo Co., Ltd.) 1.5 part by weight, activated zinc oxide 2.5 parts by weight, an antioxidant (styrenated phenol, trade name: Nocrac SP, manufactured by Ouchi Shinko Chemical Industrial Co., Ltd.) 1 part by weight, a tackifier 2 parts by weight, a vulcanization accelerating agent (dibenzothiazyl disulfide, trade name: Nocceler DM, manufactured by Ouchi Shinko Chemical Industrial Co., Ltd.) 1.2 part by weight, a vulcanization accelerating agent (tetramethylthiuram monosulfide, trade name: Nocceler TS, manufactured by Ouchi Shinko Chemical Industrial Co., Ltd.) 0.3 part by weight and sulfur 1.8 part by weight.

The physical properties of the rubber compositions were measured in the following manners.

(1) Specific gravity (density): measured by an A method according to JIS K6268.
(2) Hardness: measured at room temperature by means of a type A durometer according to JIS K6253.
(3) Tensile elastic modulus, tensile strength and breaking elongation: measured according to JIS K6251. Further, the indices were calculated by setting the values obtained in Comparative Example I-2 to 100. It is shown that the larger the numerical values are, the higher the tensile elastic modulus and the tensile strength are, and the larger the breaking elongation is.
(4) Tear strength: measured according to JIS K6252. Further, the index was calculated by setting the value obtained in Comparative Example I-2 to 100. It is shown that the larger the numerical value is, the higher the tear strength is.
(5) Akron abrasion: an abrasion weight loss was measured according to JIS K6264. Further, the index was calculated by setting the value obtained in Comparative Example I-2 to 100. It is shown that the larger the numerical value is, the higher the Akron abrasion performance is, and the better the physical properties are.
(6) Wet skid resistance: a skid resistance was measured on frosted glass wetted with water by means of a portable skid tester prescribed in ASTM-E303. Further, the index was calculated by setting the value obtained in Comparative Example I-2 to 100. It is shown that the larger the numerical value is, the higher the gripping performance is.

Table I-3

| Blend table | | Example | | | Comparative Example | | |
|---|---|---|---|---|---|---|---|
| | | I-1 | 1-2 | 1-3 | I-1 | 1-2 | 1-3 |
| Vinyl/cis-poly-butadiene rubber | (kind) | A-1 | A-1 | A-1 | A-1 | A-5 | A-5 |
| | (mass part) | 50 | 50 | 50 | 50 | 50 | 50 |
| SMR-L | (mass part) | 30 | 30 | 30 | 49 | 30 | 30 |
| S-SBR (Asaprene 303) | (mass part) | 20 | 20 | 10 | 1 | 20 | 20 |
| EVA (V218) | (mass part) | - | - | 10 | - | - | - |
| Silica (Nipsil VN3) | (mass part) | 20 | 7 | 7 | 1 | 20 | 7 |
| Other additives | (mass part) | 10.3 | 10.3 | 10.3 | 10.3 | 10.3 | 10.3 |
| Physical properties of vulcanizate | | | | | | | |
| Specific gravity | | 1.04 | 0.98 | 0.97 | 0.95 | 1.04 | 0.98 |
| Hardness | | 63 | 58 | 59 | 50 | 60 | 54 |
| 300 % tensile elastic modulus | (index) | 121 | 107 | 115 | 79 | 100 | 91 |
| Tensile strength | (index) | 113 | 97 | 100 | 73 | 100 | 90 |
| Breaking elongation Breaking elongation | (index) | 98 | 96 | 100 | 68 | 100 | 87 |
| Tear strength | (index) | 108 | 104 | 106 | 82 | 100 | 90 |
| Akron abrasion | (index) | 105 | 98 | 98 | 81 | 100 | 91 |
| Wet skid resistance | (index) | 115 | 110 | 110 | 94 | 100 | 96 |

It can be found from the results shown in Table I-3 that the rubber compositions prepared in Examples I-1 to I-3 are excellent in a tensile elastic modulus, a tensile strength, an abrasion resistance and the like as compared with the rubber compositions prepared in Comparative Examples I-1 to I-3 when the specific gravities thereof stay at the same level and that they are excellent in a balance of a reduction in a weight to a hardness and mechanical characteristics. Further, the rubber compositions prepared in Examples I-1 to I-3 are excellent as well in a gripping property in a wet state.

Examples I-4 to I-5 and Comparative Examples I-4 to I-5

The vinyl/cis-polybutadiene rubbers A-1 and A-5 obtained in Production Example 1 and Comparative Production Example 1 were used, and the blending materials excluding the vulcanization accelerating agent and sulfur out of the compositions shown in Table I-4 were kneaded by means of a Banbury mixer of 1.7 L for test to obtain a kneaded material which was a rubber composition for shoe soles. In this case, the maximum kneading temperature was controlled to 170 to 180°C. Then, a foaming agent and a cross-linking agent were kneaded into the above kneaded material on a 10 inch roll, and this was rolled out in a sheet form, followed by putting the sheet into a die and vulcanizing to obtain a vulcanizate. The vulcanization was carried out at 160°C for 10 minutes. The results thereof are shown in Table I-4.

In Table I-4, the shrinkage rate after foaming, the 300 % tensile elastic modulus, the tensile strength, the breaking elongation, the tear strength and the Akron abrasion are shown by relative values to the values obtained in Comparative Example I-5.

The shrinkage rate after foaming was obtained by measuring a shrinkage rate in 24 hours or later of the sheet vulcanized and foamed in a die of $150 \times 150 \times 4$ mm. Further, the indices thereof were calculated by setting the value obtained in Comparative Example 1-5 to 100. The smaller the index is, the smaller the shrinkage rate is, and the more excellent the dimensional stability is.

In Comparative Example I-5, the shrinkage rate after foaming was 1.1 %; the 300 % tensile elastic modulus was 6.2 MPa; the tensile strength was 11.5 MPa; the breaking elongation was 560 %; the tear strength was 39 N/mm; the Akron abrasion was 0.25 cc/3000 cycles; and the wet skid resistance was 25.

The details of symbols shown in Table I-4 are described below.

· 1,2-Polybutadiene resin: trade name: JSR RB820, melting point: 95°C, manufactured by JSR Co., Ltd.
· SMR-L, S-SBR and EVA: the same as described above
· Other additives: polyethylene glycol (trade name: PEG #4000, manufactured by Sanyo Kasei Kogyo Co., Ltd.) 1 part by weight, zinc oxide 3 parts by weight, stearic acid (manufactured by Asahi Denka Co., Ltd.) 1 part by weight, titanium oxide (anatase type) 4 parts by weight, a foaming agent (p,p'-oxybisbenzenesulfonylhydrazine (OBSH)) 2 parts by weight, a foaming agent (azodicarbonamide (ADCA)) 1 part by weight, a foaming auxiliary agent (urea derivative, trade name: Selton NF, manufactured by Sankyo Chemical Co., Ltd.) 1 part by weight, DCP (98 % dicumyl peroxide, trade name: Percumyl D, manufactured by NOF Corporation) and sulfur 0.05 part by weight.

Table I-4

|  |  | Example | | Comparative Example | |
|---|---|---|---|---|---|
|  |  | I-4 | I-5 | 1-4 | I-5 |
| Vinyl/cis-poly-butadiene rubber | (kind) | A-1 | A-1 | A-1 | A-5 |
|  | (mass part) | 55 | 55 | 55 | 55 |
| 1,2-polybutadiene resin | (mass part) | 25 | 25 | 34 | 25 |
| SMR-L | (mass part) | 10 | 10 | 10 | 10 |
| S-SBR (Asaprene 303) | (mass part) | 10 | - | 1 | 10 |
| EVA (V218) | (mass part) | - | 10 | - | - |
| Silica (Nipsil VN3) | (mass part) | 12 | 12 | 1 | 10 |
| Other additives | (mass part) | 13.75 | 13.75 | 13.75 | 13.75 |
| Physical properties of vulcanizate |  |  |  |  |  |
| Specific gravity |  | 0.94 | 0.88 | 0.90 | 0.93 |
| Hardness |  | 71 | 71 | 74 | 67 |
| Shrinkage rate after | foaming (index) | 88 | 85 | 103 | 100 |
| 300 % tensile elastic modulus | (index) | 120 | 115 | 102 | 100 |
| Tensile strength | (index) | 116 | 105 | 94 | 100 |
| Breaking elongation | (index) | 101 | 97 | 88 | 100 |
| Tear strength | (index) | 115 | 110 | 92 | 100 |
| Akron abrasion | (index) | 102 | 99 | 83 | 100 |
| Wet skid resistance | (index) | 114 | 110 | 78 | 100 |

It can be found from the results shown in Table 1-4 that the rubber compositions prepared in Examples I-4 to I-5 have a smaller shrinkage rate after foaming as compared with the rubber compositions prepared in Comparative Examples 1-4 to I-5 and that they are excellent in a dimensional stability, and it can be found that they are improved in a tensile elastic modulus, a tensile strength, an abrasion resistance and the like when the specific gravities thereof stay at the same level and that they are excellent in a balance of a reduction in a weight to a hardness and mechanical characteristics. Further, the rubber compositions prepared in Examples I-4 to 1-5 are excellent as well in a gripping property in a wet state.

Examples and comparative examples in the second embodiment Examples II-1 to II-3 and Comparative Example II-1

The vinyl/cis-polybutadiene rubbers A-2 and A-5 obtained in Production Example 2 and Comparative Production Example 1 were used, and the blending materials excluding the vulcanization accelerating agent and sulfur out of the compositions shown in Table II-1 were kneaded at a maximum temperature controlled to 170 to 180°C by means of a Banbury mixer of 1.7 L for test. Then, the vulcanization accelerating agent and sulfur were added to the above kneaded material and kneaded on a 10 inch roll in a sheet form, followed by putting the sheet into a die and vulcanizing to obtain a vulcanizate. The vulcanization was carried out at 155°C for 10 minutes. The results thereof are shown in Table II-1 together with the results obtained in Comparative Examples I-2 and I-3.
Symbols and the like shown in Table II-1 are the same as in Table I-3 described above, and measuring methods for the physical properties are the same as described above.
In Table II-1, the 300 % tensile elastic modulus, the tensile strength, the breaking elongation, the tear strength, the Akron abrasion and the wet skid resistance were shown by indices which were calculated by setting the values obtained in Comparative Example I-2 to 100. The measured values of the physical properties in Comparative Example I-2 are the same as described above.

Table II-1

| Blend table | | Example | | | Comparative Example | | |
|---|---|---|---|---|---|---|---|
| | | II-1 | II-2 | II-3 | II-1 | II-2 | II-3 |
| Vinyl/cis-poly-butadiene rubber | (kind) | A-2 | A-2 | A-2 | A-2 | A-5 | A-5 |
| | (mass part) | 50 | 50 | 50 | 50 | 50 | 50 |
| SMR-L | (mass part) | 30 | 30 | 30 | 49 | 30 | 30 |
| S-SBR (Asaprene 303) | (mass part) | 20 | 20 | 10 | 1 | 20 | 20 |
| EVA | (mass part) | - | - | 10 | - | - | - |
| Silica (Nipsil VN3) | (mass part) | 20 | 7 | 7 | 1 | 20 | 7 |
| Other additives | (mass part) | 10.3 | 10.3 | 10.3 | 10.3 | 10.3 | 10.3 |
| Physical properties of vulcanizate | | | | | | | |
| Specific gravity | | 1.04 | 0.98 | 0.97 | 0.95 | 1.04 | 0.98 |
| Hardness | | 60 | 55 | 58 | 48 | 60 | 54 |
| 300 % tensile elastic modulus | (index) | 116 | 103 | 113 | 78 | 100 | 91 |
| Tensile strength | (index) | 112 | 95 | 101 | 72 | 100 | 90 |
| Breaking elongation | (index) | 99 | 92 | 100 | 67 | 100 | 87 |
| Tear strength | (index) | 105 | 101 | 102 | 80 | 100 | 90 |
| Akron abrasion | (index) | 101 | 96 | 98 | 82 | 100 | 91 |
| Wet skid resistance | (index) | 114 | 108 | 110 | 96 | 100 | 96 |

It can be found from the results shown in Table II-1 that the rubber compositions prepared in Examples II-1 to II-3 are excellent in a tensile elastic modulus, a tensile strength, an abrasion resistance and the like as compared with the rubber compositions prepared in Comparative Example II-1 and Comparative Examples I-2 to I-3 when the specific gravities thereof stay at the same level and that they are excellent in a balance of a reduction in a weight to a hardness and mechanical characteristics. Further, the rubber compositions prepared in Examples II-1 to II-3 are excellent as well in a gripping property in a wet state.

Examples II-4 to II-5 and Comparative Example II-4

The vinyl/cis-polybutadiene rubbers A-2 and A-5 obtained in Production Example 2 and Comparative Production Example 1 were used, and the blending materials excluding the vulcanization accelerating agent and sulfur out of the compositions shown in Table II-2 were kneaded by means of a Banbury mixer of 1.7 L for test to obtain a kneaded matter which was a rubber composition for shoe soles. In this case, the maximum kneading temperature was controlled to 170 to 180°C. Then, a foaming agent and a cross-linking agent were kneaded into the above kneaded material on a 10 inch roll, and this was rolled out in a sheet form, followed by putting the sheet into a die and vulcanizing to obtain a vulcanizate. The vulcanization was carried out at 160°C for 10 minutes. The results thereof are shown in Table II-2 together with the results obtained in Comparative Example 1-5.
Symbols and the like shown in Table II-2 are the same as in Table I-4 described above, and measuring methods for the physical properties are the same as described above.
In Table II-2, the shrinkage rate after foaming, the 300 % tensile elastic modulus, the tensile strength, the breaking elongation, the tear strength, the Akron abrasion and the wet skid resistance are relative values to the values obtained in Comparative Example I-5. The measured values of the physical properties in Comparative Example I-5 are the same as described above.

Table II-2

|  |  | Example | | Comparative Example | |
|---|---|---|---|---|---|
|  |  | II-4 | II-5 | II-4 | I-5 |
| Vinyl/cis-poly- | (kind) | A-2 | A-2 | A-2 | A-5 |
| butadiene rubber | (mass part) | 55 | 55 | 55 | 55 |
| JSR RB820 | (mass part) | 25 | 25 | 34 | 25 |
| SMR-L | (mass part) | 10 | 10 | 10 | 10 |
| S-SBR (Asaprene 303) | (mass part) | 10 | - | 1 | 10 |
| EVA | (mass part) | - | 10 | - | - |
| Silica (Nipsil VN3) | (mass part) | 12 | 12 | 1 | 12 |
| Other additives | (mass part) | 13.75 | 13.75 | 13.75 | 13.75 |
| Physical properties of vulcanizate |  |  |  |  |  |
| Specific gravity |  | 0.94 | 0.88 | 0.90 | 0.93 |
| Hardness |  | 68 | 68 | 72 | 67 |
| Shrinkage rate after foaming | (index) | 92 | 90 | 102 | 100 |
| 300 % tensile elastic modulus | (index) | 117 | 111 | 103 | 100 |
| Tensile strength | (index) | 111 | 103 | 92 | 100 |
| Breaking elongation | (index) | 98 | 96 | 89 | 100 |
| Tear strength | (index) | 112 | 107 | 91 | 100 |
| Akron abrasion | (index) | 102 | 98 | 82 | 100 |
| Wet skid resistance | (index) | 115 | 110 | 81 | 100 |

It can be found from the results shown in Table II-2 that the rubber foam compositions prepared in Examples 11-4 to II-5 have a smaller shrinkage rate after foaming as compared with the rubber foam compositions prepared in Comparative Example II-4 and Comparative Example I-5 and that they are excellent in a dimensional stability, and it can be found that they are improved in a tensile elastic modulus, a tensile strength, an abrasion resistance and the like when the specific gravities thereof stay at the same level and that they are excellent in a balance of a reduction in a weight to a hardness and mechanical characteristics. Further, the rubber compositions prepared in Examples II-4 to II-5 are excellent as well in a gripping property in a wet state.

Examples and comparative examples in the third embodiment Examples III-1 to III-3 and Comparative Example III-1

The vinyl/cis-polybutadiene rubbers A-3 and A-5 obtained in Production Example 3 and Comparative Production Example 1 were used, and the blending materials excluding the vulcanization accelerating agent and sulfur out of the compositions shown in Table III-1 were kneaded at a maximum temperature controlled to 170 to 180°C by means of a Banbury mixer of 1.7 L for test. Then, the vulcanization accelerating agent and sulfur were added to the above kneaded material and kneaded on a 10 inch roll, and this was rolled out in a sheet form, followed by putting the sheet into a die and vulcanizing to obtain a vulcanizate. The vulcanization was carried out at 155°C for 10 minutes. The results thereof are shown in Table III-1 together with the results obtained in Comparative Examples I-2 and I-3.
Symbols and the like shown in Table III-1 are the same as in Table I-3 described above, and measuring methods for the physical properties are the same as described above.
In Table III-1, the 300 % tensile elastic modulus, the tensile strength, the breaking elongation, the tear strength, the Akron abrasion and the wet skid resistance were shown by indices which were calculated by setting the values obtained in Comparative Example I-2 to 100. The measured values of the physical properties in Comparative Example I-2 are the same as described above.

Table III-1

|  |  | Example | | | Comparative Example | | |
|---|---|---|---|---|---|---|---|
| Blend table |  | III-1 | III-2 | III-3 | III-1 | I-2 | I-3 |
| Vinyl/cis-poly-butadiene rubber | (kind) | A-3 | A-3 | A-3 | A-3 | A-5 | A-5 |
|  | (mass part) | 50 | 50 | 50 | 50 | 50 | 50 |
| SMR-L | (mass part) | 30 | 30 | 30 | 49 | 30 | 30 |
| S-SBR (Asaprene 303) | (mass part) | 20 | 20 | 10 | 1 | 20 | 20 |
| EVA (V218) | (mass part) | - | - | 10 | - | - | - |
| Silica (Nipsil VN3) | (mass part) | 20 | 7 | 7 | 1 | 20 | 7 |
| Other additives | (mass part) | 10.3 | 10.3 | 10.3 | 10.3 | 10.3 | 10.3 |
| Physical properties of vulcanizate |  |  |  |  |  |  |  |
| Specific gravity |  | 1.04 | 0.98 | 0.97 | 0.95 | 1.04 | 0.98 |
| Hardness |  | 62 | 57 | 59 | 49 | 60 | 54 |
| 300 % tensile elastic modulus | (index) | 120 | 105 | 110 | 80 | 100 | 91 |
| Tensile strength | (index) | 115 | 96 | 100 | 75 | 100 | 90 |
| Breaking elongation Breaking elongation | (index) | 99 | 95 | 99 | 70 | 100 | 87 |
| Tear strength | (index) | 106 | 102 | 105 | 80 | 100 | 90 |
| Akron abrasion | (index) | 104 | 97 | 97 | 80 | 100 | 91 |
| Wet skid resistance | (index) | 112 | 108 | 108 | 95 | 100 | 96 |

It can be found from the results shown in Table III-1 that the rubber compositions prepared in Examples III-1 to III-3 are improved in a tensile elastic modulus, a tensile strength, an abrasion resistance, a gripping property in a wet state and the like as compared with the rubber compositions prepared in Comparative Example III-1 and Comparative Examples I-2 to I-3 when the specific gravities thereof stay at the same level and that they are excellent in a balance of a reduction in a weight to a hardness and mechanical characteristics.

Examples III-4 to III-5 and Comparative Examples III-4 and I-5

The vinyl/cis-polybutadiene rubbers A-3 and A-5 obtained in Production Example 3 and Comparative Production Example 1 were used, and the blending materials excluding the vulcanization accelerating agent and sulfur out of the compositions shown in Table III-2 were kneaded by means of a Banbury mixer of 1.7 L for test to obtain a kneaded material which was a rubber composition for shoe soles. In this case, the maximum kneading temperature was controlled to 170 to 180°C. Then, a foaming agent and a cross-linking agent were kneaded into the above kneaded matter on a 10 inch roll, and this was rolled out in a sheet form, followed by putting the sheet into a die and vulcanizing to obtain a vulcanizate. The vulcanization was carried out at 160°C for 10 minutes. The results thereof are shown in Table III-2 together with the results obtained in Comparative Example I-5.

Symbols and the like shown in Table III-2 are the same as in Table I-4 described above, and measuring methods for the physical properties are the same as described above.

In Table III-2, the shrinkage rate after foaming, the 300 % tensile elastic modulus, the tensile strength, the breaking elongation, the tear strength, the Akron abrasion and the wet skid resistance were shown by indices which were calculated by setting the value obtained in Comparative Example I-5 to 100. The measured values of the physical properties in Comparative Example I-5 are the same as described above.

Table III-2

|  |  | Example | | Comparative Example | |
| --- | --- | --- | --- | --- | --- |
|  |  | III-4 | III-5 | III-4 | I-5 |
| Vinyl/cis-poly-butadiene rubber | (kind) | A-3 | A-3 | A-3 | A-5 |
|  | (mass part) | 55 | 55 | 55 | 55 |
| 1,2-polybutadiene resin | (mass part) | 25 | 25 | 34 | 25 |
| SMR-L | (mass part) | 10 | 10 | 10 | 10 |
| S-SBR (Asaprene 303) | (mass part) | 10 | - | 1 | 10 |
| EVA (V218) | (mass part) | - | 10 | - | - |
| Silica (Nipsil VN3) | (mass part) | 12 | 12 | 1 | 12 |
| Other additives | (mass part) | 13.75 | 13.75 | 13.75 | 13.75 |
| Physical properties of vulcanizate |  |  |  |  |  |
| Specific gravity |  | 0.94 | 0.88 | 0.9 | 0.93 |
| Hardness |  | 70 | 70 | 73 | 67 |
| Shrinkage rate after foaming | (index) | 89 | 87 | 102 | 100 |
| 300 % tensile elastic modulus | (index) | 118 | 112 | 102 | 100 |
| Tensile strength | (index) | 114 | 102 | 95 | 100 |
| Breaking elongation | (index) | 100 | 95 | 90 | 100 |
| Tear strength | (index) | 113 | 108 | 90 | 100 |
| Akron abrasion | (index) | 103 | 100 | 85 | 100 |
| Wet skid resistance | (index) | 112 | 108 | 80 | 100 |

It can be found from the results shown in Table III-2 that the rubber compositions prepared in Examples III-4 to III-5 have a smaller shrinkage rate after foaming as compared with the rubber compositions prepared in Comparative Example III-4 and Comparative Example I-5 and that they are excellent in a dimensional stability, and it can be found that they are improved in a tensile elastic modulus, a tensile strength, an abrasion resistance, a gripping property in a wet state and the like when the specific gravities thereof stay at the same level and that they are excellent in a balance of a reduction in a weight to a hardness and mechanical characteristics.

INDUSTRIAL APPLICABILITY

The rubber composition for shoe soles according to the present invention is lightweight and has an appropriate hardness, and it is excellent in a tensile strength, a tear strength, an abrasion resistance and a gripping property. The rubber foam composition for shoe soles according to the present invention is excellent, in addition to the characteristics described above, in a dimensional stability after foaming. Accordingly, an outsole for shoes prepared by using the rubber composition or the rubber foam composition according to the present invention as a rubber base material is suited as an outsole for shoes such as men's shoes, ladies' shoes, sport shoes and the like. The above rubber composition or rubber foam composition can be used as well for car parts such as tires, rubber vibration isolators and the like, industrial products such as belts, hoses, rubber vibration isolators and the like, toys and parts for miscellaneous goods

## Claims

1. A rubber composition for shoe soles prepared by blending 100 mass parts of a polymer component comprising 10 to 90 mass % of a vinyl/cis-polybutadiene rubber (A) comprising 1,4-cis-polybutadiene (a) and 1,2-polybutadiene crystalline fibers (b) in which the crystalline fibers have an average fiber length of 200 nm or less and an average aspect ratio of 10 or less, in which the number of the crystalline fibers having a fiber length of 200 nm or less is 90 fibers or more per 25 $\mu m^2$ and in which a melting point is 170°C or higher, 10 to 50 mass % of a diene base rubber (B) other than the vinyl/cis-polybutadiene rubber (A) and 2 to 50 mass % of a thermoplastic polymer (C) with 2 to 50 mass parts of a rubber reinforcing material (D).

2. The rubber composition for shoe soles as described in claim 1, wherein the vinyl/cis-polybutadiene rubber (A) is obtained by:

   (1) subjecting a mixture comprising 1,3-butadiene and a hydrocarbon base solvent as principal components to cis-1,4-polymerization with 1,3-butadiene in the presence of a catalyst comprising an organic aluminum compound and a soluble cobalt compound to produce 1,4-cis-polybutadiene (a) and
   (2) polymerizing the polymerization reaction mixture thus obtained with 1,3-butadiene in the presence of a catalyst comprising an organic aluminum compound and carbon disulfide and in the presence of an unsaturated high molecular compound comprising at least one selected from polyisoprene, crystalline polybutadiene having a melting point of 150°C or lower, liquid polybutadiene and derivatives thereof after further adding 1,3-butadiene to the above polymerization reaction mixture or without adding 1,3-butadiene thereto to produce 1,2-polybutadiene crystalline fibers (b) having a melting point of 170°C or higher,
   (3) wherein the 1,2-polybutadiene crystalline fibers (b) and the unsaturated high molecular compound are dispersed in a matrix comprising the 1,4-cis-polybutadiene (a).

3. The rubber composition for shoe soles as described in claim 1, wherein the vinyl/cis-polybutadiene rubber (A) is obtained by:

   (1) adding a catalyst comprising an organic aluminum compound and a soluble cobalt compound to a mixture comprising 1,3-butadiene and a hydrocarbon base solvent having a solubility parameter (SP value) of 8.5 or less as principal components to subject 1,3-butadiene to cis-1,4-polymerization to thereby produce 1,4-cis-polybutadiene (a), wherein an organic aluminum compound represented by a formula $AlR_nX_{3-n}$ (wherein R is an alkyl group having 1 to 6 carbon atoms, a phenyl group or a cycloalkyl group; X is a halogen element; and n is a number of 1.5 to 2) is used as the organic aluminum compound and
   (2) then subjecting the polymerization reaction mixture thus obtained to 1,2-polymerization with 1,3-butadiene in the presence of a catalyst comprising a soluble cobalt compound, an organic aluminum compound represented by a formula $AlR_3$ (wherein R is an alkyl group having 1 to 6 carbon atoms, a phenyl group or a cycloalkyl group) and carbon disulfide after adding 1,3-butadiene to the above polymerization reaction mixture or without adding 1,3-butadiene thereto to produce 1,2-polybutadiene crystalline fibers (b) having a melting point of 170°C or higher.

4. The rubber composition for shoe soles as described in claim 1, wherein the vinyl/cis-polybutadiene rubber (A) is obtained by:

   (1) adding a catalyst comprising an organic aluminum compound and a soluble cobalt compound to a mixture comprising 1,3-butadiene and a hydrocarbon base solvent as principal components to subject 1,3-butadiene to cis-1,4-polymerization to thereby produce 1,4-cis-polybutadiene (a),
   (2) subjecting the polymerization reaction mixture thus obtained to 1,2-polymerization with 1,3-butadiene in the presence of a catalyst comprising a soluble cobalt compound, an organic aluminum compound represented by a formula $AlR_3$ (wherein R is an alkyl group having 1 to 6 carbon atoms, a phenyl group or a cycloalkyl group) and carbon disulfide after adding 1,3-butadiene to the above polymerization reaction mixture or without adding 1,3-butadiene thereto to produce 1,2-polybutadiene crystalline fibers (b) having a melting point of 170°C or higher and

(3) thereby obtaining vinyl/cis-polybutadiene (A-4) in which the 1,2-polybutadiene crystalline fibers (b) are dispersed in a matrix comprising the 1,4-cis-polybutadiene (a) and solution-mixing the vinyl/cis-polybutadiene (A-4) with 1,4-cis-polybutadiene (a-4).

5. The rubber composition for shoe soles as described in claim 4, wherein the 1,4-cis-polybutadiene mixed in the step (3) has a smaller Mooney viscosity than that of the 1,4-cis-polybutadiene (a) obtained in the step (1).

6. The rubber composition for shoe soles as described in any of claims 1 to 5, wherein the 1,4-cis-polybutadiene (a) has the following characteristics:

(1) a 1,4-cis structure content is 80 mol % or more;
(2) a ratio (toluene solution viscosity/Mooney viscosity) of a toluene solution viscosity (T-cp) to a Mooney viscosity (ML1 + 4, 100°C) is 1 or more; and
(3) an intrinsic viscosity [η] is 1.0 to 5.0 dl/g.

7. The rubber composition for shoe soles as described in any of claims 1 to 6, wherein the diene base rubber (B) other than the vinyl/cis-polybutadiene rubber (A) is natural rubber and/or polyisoprene.

8. The rubber composition for shoe soles as described in any of claims 1 to 7, wherein the rubber reinforcing material is silica and/or carbon black.

9. An outsole for shoes **characterized by** using the rubber composition for shoe soles as described in any of claims 1 to 8.

10. A rubber foam composition for shoe soles prepared by foaming the rubber composition for shoe soles as described in any of claims 1 to 8.

11. An outsole for shoes **characterized by** using the rubber foam composition as described in claim 10.

Fig. 1

(A)                                      (B)

**EP 2 045 287 A1**

| INTERNATIONAL SEARCH REPORT | International application No. |
|---|---|
| | PCT/JP2007/063884 |

**A. CLASSIFICATION OF SUBJECT MATTER**
*C08L9/00*(2006.01)i, *A43B13/04*(2006.01)i, *C08J9/04*(2006.01)i, *C08K3/04*(2006.01)i, *C08K3/36*(2006.01)i, *C08L101/00*(2006.01)i

According to International Patent Classification (IPC) or to both national classification and IPC

**B. FIELDS SEARCHED**

Minimum documentation searched (classification system followed by classification symbols)
C08L9/00, A43B13/04, C08J9/04, C08K3/04, C08K3/36, C08L101/00

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-22247 A (Ube Industries, Ltd.), 26 January, 2006 (26.01.06), Claims; Par. Nos. [0025] to [0029], [0039]; examples (Family: none) | 1-11 |
| A | WO 2006/4036 A1 (JSR Corp.), 12 January, 2006 (12.01.06), Claims; Par. Nos. [0066], [0067]; examples & JP 2006-16518 A      & JP 2006-28360 A & JP 2006-63183 A | 1-11 |
| A | WO 2006/52035 A1 (Ube Industries, Ltd.), 18 May, 2006 (18.05.06), Claims; examples & US 2007/155889 A1 | 1-11 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 October, 2007 (05.10.07) | 16 October, 2007 (16.10.07) |

| Name and mailing address of the ISA/ Japanese Patent Office | Authorized officer |
|---|---|
| Facsimile No. | Telephone No. |

Form PCT/ISA/210 (second sheet) (April 2005)

**INTERNATIONAL SEARCH REPORT**

International application No.

PCT/JP2007/063884

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2005/56663 A1   (Ube Industries, Ltd.),<br>23 June, 2005 (23.06.05),<br>Claims; examples<br>& EP 1693411 A1 | 1-11 |
| A | JP 2001-161404 A1   (Sumitomo Rubber Industries,<br>Ltd.),<br>19 June, 2001 (19.06.01),<br>Claims; examples<br>(Family: none) | 1-11 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3086740 A
- JP 10017717 A
- JP 2001299404 A
- JP 2002282006 A
- JP 2000166603 A
- JP 2006016518 A
- JP 4085304 A
- JP 26451965 B

**Non-patent literature cited in the description**

- Rubber Industry Handbook. 20 January 1994, 720-721